# EUROPEAN PATENT APPLICATION

(11) **EP 4 668 852 A1**
(43) Date of publication of application: **24.12.2025**
(21) Application number: 23921722.7
(22) Date of filing: 14.02.2023
(51) Int. Cl.: H04W 36/00

(54) **RANDOM ACCESS METHOD AND APPARATUS**

(71) Applicant: Fujitsu Limited, Kawasaki-shi, Kanagawa 211-8588 (JP)
(72) Inventor: JIA, Meiyi, Beijing 100022 (CN); LI, Guorong, Beijing 100022 (CN); YI, Su, Beijing 100022 (CN)
(74) Representative: Haseltine Lake Kempner LLP
(86) International application number: PCT/CN2023/076029
(87) International publication number: WO 2024/168554

(57) **Abstract**

A random access method and apparatus. The method includes: when a random access procedure on a candidate cell is initiated, for the candidate cell, switching an active uplink BWP from a first uplink BWP to a second uplink BWP or a third uplink BWP or a fourth uplink BWP by an MAC entity of a terminal equipment, the second uplink BWP being an initial uplink BWP of the candidate cell or a serving cell associated with the candidate cell, the third uplink BWP being an uplink BWP of the candidate cell configured with PRACH occasions, and the fourth uplink BWP being an uplink BWP of the candidate cell indicated by a PDCCH.

## Description

### Technical Field

This disclosure relates to the field of communication technologies.

### Background

There are two types of random access procedures: 4-step random access (4-step RA) using MSG 1 and 2-step random access (2-step RA) using MSGA. Both random access procedures support contention-based random access (CBRA) and contention-free random access (CFRA).

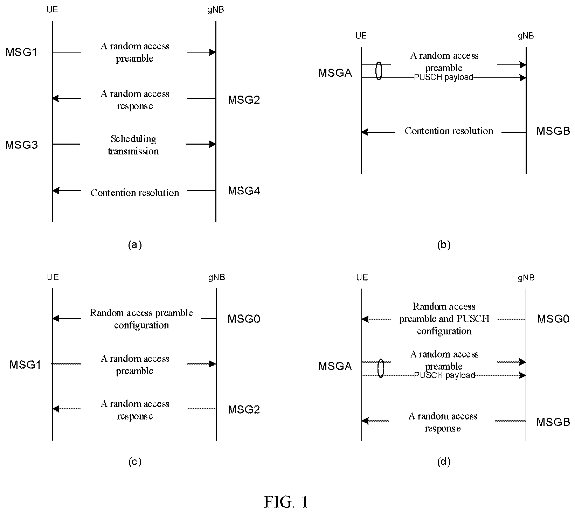

FIG. 1 is a schematic diagram of information exchange for 4-step random access and 2-step random access.

MSG 1 of the 4-step RA type includes a preamble on a PRACH (physical random access channel). After MSG 1 transmission, a UE monitors a response from a network in a configured window.

For CFRA, the network allocates a dedicated preamble for MSG 1 transmission, and upon receipt of a random access response from the network, the UE terminates the random access procedure (as shown in (c) of FIG. 1).

For CBRA, when a random access response is received, the UE uses an UL grant scheduled in the response to transmit MSG 3, and monitors contention resolution (as shown in (a) of FIG. 1); if the contention resolution is not successful after MSG 3 transmission/retransmission, the UE turns back to MSG 1 transmission.

MSGA of the 2-step RA type includes a preamble on a PRACH and a payload on a PUSCH. After MSGA transmission, the UE monitors a response from the network in a configured window.

For CFRA, a dedicated preamble and a PUSCH resource for MSGA transmission are configured, and once a response is received from the network, the UE terminates the random access procedure (as shown in (d) of FIG. 1).

For CBFA, if the contention resolution is successful when a response is received from the network, the UE terminates the random access procedure (as shown in (b) of FIG. 1).

When carrier aggregation (CA) is configured, for random access of 2-step RA type, random access is performed only on a primary cell (PCell), while contention resolution may be cross-scheduled by the PCell.

When CA is configured, for a random access procedure of 4-step RA type, former three steps of CBRA always occur in the PCell, and contention resolution may be cross-scheduled by the PCell. Beginning three steps of CFRA on the PCell are all on the PCell. CFRA on a secondary cell (SCell) is initiated only by a gNB, so as to establish secondary TAG timing advance: this procedure is initiated by the gNB with a PDCCH order (step 0) transmitted on a scheduling cell of an active SCell of a secondary TAG, wherein preamble transmission (step 1) occurs on the indicated SCell, and random access correspondingly (step 2) occurs on the PCell.

When a terminal equipment moves from coverage area of a cell to coverage area of another cell, serving cell changes need to be performed at a certain point. Currently, serving cell changes are triggered by layer 3 (L3) measurement and completed by RRC signaling, and reconfigration with sync triggered for a PCell change and a primary secondary cell (PSCell) change and SCells release, where applicable, are increased. All cases involve a complete layer 1, i.e. layer 1 (and layer 2, L2) reset, thereby resulting in longer delays, higher overhead and longer interruption times than beam switching mobility. An objective of L1/L2 mobility enhancement is to ensure serving cell changes via L1/L2 signaling for lower delay, overhead and interruption times.

For lower mobility delay, a mechanism and procedure of L1/L2 based inter-cell mobility include:
configuration and maintenance of multiple candidate cells to allow rapid application of configuration of candidate cells;
for possibly applicable scenarios, a dynamic switching mechanism between candidate serving cells (including special cells and secondary cells) based on L1/L2 signaling;
L1 enhancement of inter-cell beam management, including L1 measurement and reporting, as well as beam indications;
timing advance management; and
CU-DU interface signaling to support L1/L2 mobility.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

When a random access procedure is initiated on a serving cell, an MAC entity will: (1) clear Msg3 and MSGA buffers and initialize relevant (type independent) variables; (2) select carriers for performing the random access procedure; (3) perform BWP (bandwidth part) operations; (4) select a random access resource group applicable to the current random access procedure; and (5) set a random access type and initialize the random access type specific variables.

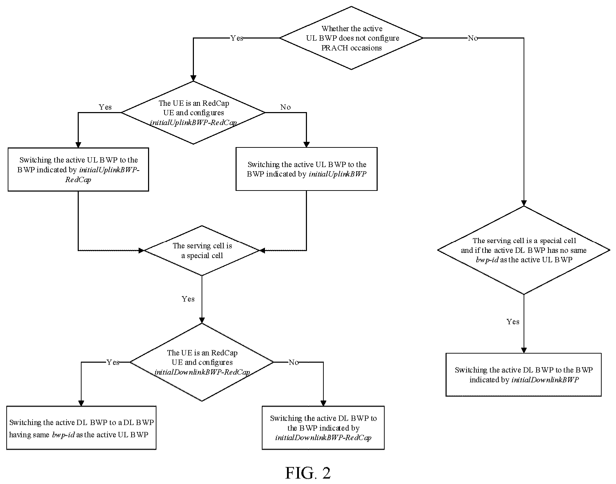

FIG. 2 is a flowchart of BWP operation.

For (3), specifically, when a random access procedure is initiated on a serving cell, for a selected carrier of this serving cell, as shown in FIG. 2, for a non-RedCap UE, if an active UL BWP is configured with PRACH occasions, and if this serving cell is a special cell and an active DL BWP does not have the same *bwp-id* as the active UL BWP, the MAC entity will switch the active DL BWP to a DL BWP with the same *bwp-id* as the active UL BWP; if the active UL BWP is not configured with PRACH occasions, the MAC entity will switch the active UL BWP to a BWP indicated by *initialUplinkBWP*; and if this serving cell is a special cell, the MAC entity will switch the active DL BWP to the BWP indicated by *initialUplinkBWP.*

For (5), specifically, if it is a random access procedure initiated by a PDCCH order and *ra-PreambleIndex* explicitly provided by a PDCCH is not 0b000000, or if the random access procedure is initiated for an SI request and random access resources for the SI request have already been explicitly provided by RRC, or if the random access procedure is initiated for beam failure recovery of a special cell and if RRC has explicitly provided contention-free random access resources for a beam failure recovery request of 4-step RA type for a BWP selected in the random access procedure, or if the random access procedure is initiated for reconfiguration with sync and if RRC has explicitly provided random access resources of 4-step RA type in *rach-ConfigDedicated* for the BWP selected in the random access procedure, the MAC entity will set *RA_TYPE* to be 4-stepRA;

Otherwise, if the BWP selected in the random access procedure is configured with random access resources of 2-step and 4-step RA types within a selected random access resource group (step (4)) and RSRP of downlink pathloss reference is greater than *msgA-RSRP-Threshold,* or if the BWP selected in the random access procedure is only configured with random access resources of 2-step type within a selected random access resource group, or if the random access procedure is initiated for reconfiguration with sync and if RRC has explicitly provided contention-free random access resources of 2-step RA type in *rach-ConfigDedicated* for the BWP selected in the random access procedure, the MAC entity will set *RA_TYPE* to be 2-step RA;
otherwise, the MAC entity will set *RA_TYPE* to be 4-stepRA.

Timing advance management is a part of a mechanism and procedure for achieving L1/L2 inter-cell mobility. It has been agreed to support timing advance acquisition (TA) of candidate cells before receiving a cell switch command in a layer 1/layer 2 triggered mobility (LTM) procedure. A mechanism for acquiring TA of a candidate cell is a PDCCH ordered RACH. TA update of the candidate cell, i.e. re-acquisition of TA, may be triggered by a network, and a triggering mechanism identical to that for acquiring initial TA is reused, that is, random access triggered by a PDCCH order on the candidate cell.

The PDCCH ordered RACH acquires the TA of the LTM candidate cell, wherein the PDCCH order is triggered only by a source cell, and an indication of the candidate cell and/or a PRACH occasion of the candidate cell is/are introduced into DCI thereof. RACH resource configuration of the candidate cell is provided before the PDCCH order.

It was found by the inventors that a current random access procedure is performed on a serving cell, and the following problems exist in a random access procedure on a candidate cell:
1) regarding BWP operation: the current random access procedure is performed on an active BWP configured with PRACH occlusions, but all BWPs of candidate cells are not activated, hence, according to the current mechanism, a random access procedure is unable to be performed on candidate cells;
2) regarding selection of random access types: a random access procedure on a serving cell supports two types, 4-step RA and 2-step RA, wherein MSGA of 2-step RA includes RA preambles and PUSCHs. If a candidate cell supports 2-step RA, contents of the PUSCHs need to be determined; and if the candidate cell does not support 2-step RA, the current random access procedure may possibly select 2-step RA, because the random access type is selected based on network configuration and RSRP;
3) regarding triggering of a random access procedure on a candidate cell: currently, a source cell may transmit a PDCCH order to trigger the random access procedure on the candidate cell, and in case of rapid changes in link quality of the candidate cell, the network may possibly be unable to obtain information on link quality in time, hence, the terminal is instructed to acquire TA on a candidate cell with poor link quality or misses a candidate cell with good link quality to acquire TA.

In order to solve one or more of the above problems, embodiments of this disclosure provide a random access method and apparatus.

According to a first aspect of the embodiments of this disclosure, there is provided a random access apparatus, the apparatus including: a first switch unit configured to, when a random access procedure on a candidate cell is initiated, for the candidate cell, switch an active uplink BWP from a first uplink BWP to a second uplink BWP or a third uplink BWP or a fourth uplink BWP by an MAC entity of a terminal equipment, the second uplink BWP being an initial uplink BWP of the candidate cell or a serving cell associated with the candidate cell, the third uplink BWP being an uplink BWP of the candidate cell configured with PRACH occasions, and the fourth uplink BWP being an uplink BWP of the candidate cell indicated by a PDCCH.

According to a second aspect of the embodiments of this disclosure, there is provided a random access apparatus, the apparatus including: a first setting unit configured to, when a random access procedure on a candidate cell is initiated, set a random access type to be of 4-step random access (4-stepRA); or a second setting unit configured to, when a random access procedure on a candidate cell is initiated, set a random access type to be of 2-step random access (2-stepRA), an identifier of the terminal equipment in the candidate cell being included in a PUSCH of an MSGA.

According to a third aspect of the embodiments of this disclosure, there is provided a random access apparatus, the apparatus including: a first initiating unit configured to, when a terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, initiate a random access procedure on the candidate cell.

According to a fourth aspect of the embodiments of this disclosure, there is provided a terminal equipment, the terminal equipment including the apparatus as described in the embodiment of the first or the second or the third aspect of this disclosure.

According to a fifth aspect of the embodiments of this disclosure, there is provided a communication system, the communication system including a network device and the terminal equipment as described in the embodiment of the fourth aspect of this disclosure.

According to a sixth aspect of the embodiments of this disclosure, there is provided a random access method, the method including: when a random access procedure on a candidate cell is initiated, for the candidate cell, switching an active uplink BWP from a first uplink BWP to a second uplink BWP or a third uplink BWP or a fourth uplink BWP by an MAC entity of a terminal equipment, the second uplink BWP being an initial uplink BWP of the candidate cell or a serving cell associated with the candidate cell, the third uplink BWP being an uplink BWP of the candidate cell configured with PRACH occasions, and the fourth uplink BWP being an uplink BWP of the candidate cell indicated by a PDCCH.

According to a seventh aspect of the embodiments of this disclosure, there is provided a random access method, the method including: when a random access procedure on a candidate cell is initiated, setting a random access type to be of 4-step random access (4-stepRA); or, when a random access procedure on a candidate cell is initiated, setting a random access type to be of 2-step random access (2-stepRA), an identifier of the terminal equipment in the candidate cell being included in a PUSCH of an MSGA.

According to an eighth aspect of the embodiments of this disclosure, there is provided a random access method, the method including: when a terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, initiating a random access procedure by the terminal equipment on the candidate cell.

According to a ninth aspect of the embodiments of this disclosure, there is provided a computer readable program code, which, when performed in a random access apparatus or a terminal equipment, will cause the random access apparatus or the terminal equipment to carry out the random access method as described in the embodiment of the sixth or seventh or eighth aspect of the embodiments of this disclosure.

According to a tenth aspect of the embodiments of this disclosure, there is provided a computer readable medium, including a computer readable program code, which will cause a random access apparatus or a terminal equipment to carry out the random access method as described in the embodiment of the sixth or seventh or eighth aspect of the embodiments of this disclosure.

Advantages of the embodiments of this disclosure exist in that:
when a random access procedure on a candidate cell is initiated, for the candidate cell, an MAC entity of a terminal equipment switches an active uplink BWP from a first uplink BWP to a second uplink BWP or a third uplink BWP or a fourth uplink BWP, hence, a random access procedure may be performed on the candidate cell, thereby acquiring latest uplink timing before performing cell change, and reducing interruption time of LTM;
in addition, when a random access procedure on a candidate cell is initiated, the terminal equipment sets a random access type to be of 4-step random access (2-stepRA), or, when a random access procedure on a candidate cell is initiated, the terminal equipment sets a random access type to be of 2-step random access (2-stepRA), and an identifier of the terminal equipment in the candidate cell is included in a PUSCH of an MSGA; hence, the terminal equipment is able to select a random access type, thereby acquiring latest uplink timing before performing cell change, and reducing interruption time of LTM;
furthermore, when the terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, the terminal equipment initiates a random access procedure on the candidate cell; hence, in case of rapid changes in link quality of the candidate cell, the terminal is instructed to initiate a random access procedure on a candidate cell with good link quality, thereby acquiring a TA value on the candidate cell with good link quality.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of information exchange between 4-step random access and 2-step random access;
FIG. 2 is a schematic diagram of an MAC RAR;
FIG. 3 is a schematic diagram of a communication system of embodiments of this disclosure;
FIG. 4 is a schematic diagram of a scenario of deployment of repeater/RIS;
FIG. 5 is a schematic diagram of a scenario of multi-TRP operations;
FIG. 6 is a schematic diagram of a scenario of L1/L2-based inter-cell mobility;
FIG. 7 is a schematic diagram of an intra-gNB-DU L1/L2-triggered mobility procedure;
FIG. 8 is a schematic diagram of an inter-gNB-DU L1/L2-triggered mobility procedure;
FIG. 9 is a schematic diagram of the random access method of embodiment 1 of this disclosure;
FIG. 10 is a schematic diagram of the random access method of embodiment 2 of this disclosure;
FIG. 11 is a schematic diagram of the random access method of embodiment 3 of this disclosure;
FIG. 12 is a schematic diagram of the random access apparatus of embodiment 4 of this disclosure;
FIG. 13 is a schematic diagram of the random access apparatus of embodiment 5 of this disclosure;
FIG. 14 is a schematic diagram of the random access apparatus of embodiment 6 of this disclosure;
FIG. 15 is a block diagram of a systematic structure of the terminal equipment of embodiment 7 of this disclosure;
FIG. 16 is a schematic diagram of the random access method of embodiment 8 of this disclosure;
FIG. 17 is a schematic diagram of the random access apparatus of embodiment 9 of this disclosure; and
FIG. 18 is a block diagram of a systematic structure of the network device of embodiment 10 of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), high-speed packet access (HSPA), and new radio (NR), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB-CU and one or more gNB-DUs, wherein the CU/DUs are a logical node of the gNB having a part of functions of the gNB. The term "cell" may refer to a base station and/or its coverage area, depending on a context of the term. A gNB-DU supports one or more cells, and one cell is supported by only one gNB-DU.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), or an access terminal (AT), etc., such as a terminal equipment served by an IAB-node or IAB-donor under an IAB architecture.

Wherein, the terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, "when...", "in a case of...", "for a case where..." and "if' all indicate being based on one or more conditions or states, and in addition, these expressions are interchangeable.

Scenarios of the embodiments of this disclosure shall be described below by way of examples; however, this disclosure is not limited thereto.

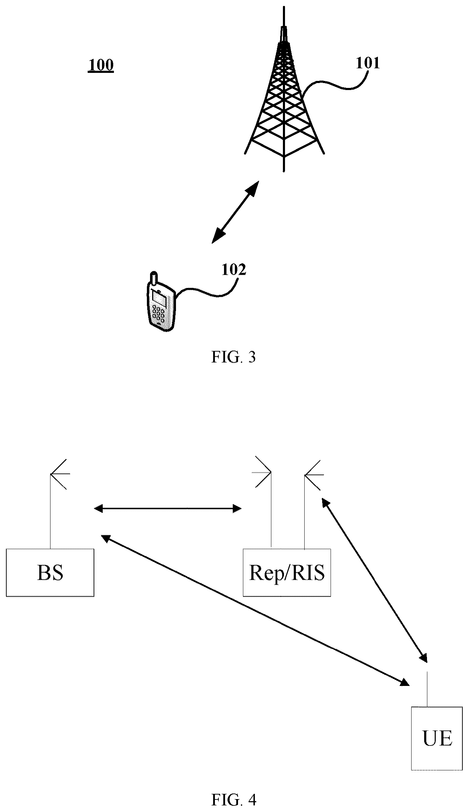

FIG. 3 is a schematic diagram of a communication system of embodiments of this disclosure, in which a case where a terminal equipment and a network device are taken as examples is schematically shown. As shown in FIG. 3, a communication system 100 may include a network device 101 and a terminal equipment 102. For the sake of simplicity, an example having only one terminal equipment is schematically given in FIG. 3; however, a case where there are multiple terminal equipments may also be included.

In the embodiments of this disclosure, existing traffics or traffics that may be implemented in the future may be performed between the network device 101 and the terminal equipment 102. For example, such traffics may include but not limited to enhanced mobile broadband (eMBB), massive machine type communication (mMTC), and ultra-reliable and low-latency communication (URLLC), etc.

In an existing communication system, in order to increase coverage, an additional node or device or entity is added between a base station (such as a gNB or gNB-CU or gNB-DU) and a mobile terminal (terminal equipment), which has a simplified protocol stack and/or function for processing (such as amplifying, and routing, etc.) signals and/or symbols received from the base station and/or the mobile terminal and transmitting them to the mobile terminal and/or the base station.

The additional node or device or entity may be a repeater, an RIS (reconfigurable intelligent surface), and a TRP (transmit/receive point), etc.

The scenario where an additional node or device or entity is used between the base station and the mobile terminal is applicable to the embodiments of this disclosure, for example, the scenario includes:

### (1) Scenario of repeater/RIS

FIG. 4 is a schematic diagram of the scenario of deployment of repeater/RIS.

As shown in FIG. 4, a repeater/RIS is a device that receives, processes and transmits radiated or conducted RF carriers in a downlink direction (from a base station to a mobile area) and an uplink direction (from the mobile terminal to the base station).

For a repeater, processing includes power amplification, and the repeater is, for example, an NCR (network controlled repeater).

For an RIS, processing includes beamforming, and reshaping propagation environments, etc. In an operating frequency band where only a downlink or an uplink is designated, the designated uplink or downlink is repeated only.

### (2) Scenario of multi-TRP operations

A TRP is a part of a gNB that receives signals from and/or transmits signals to a terminal UE.

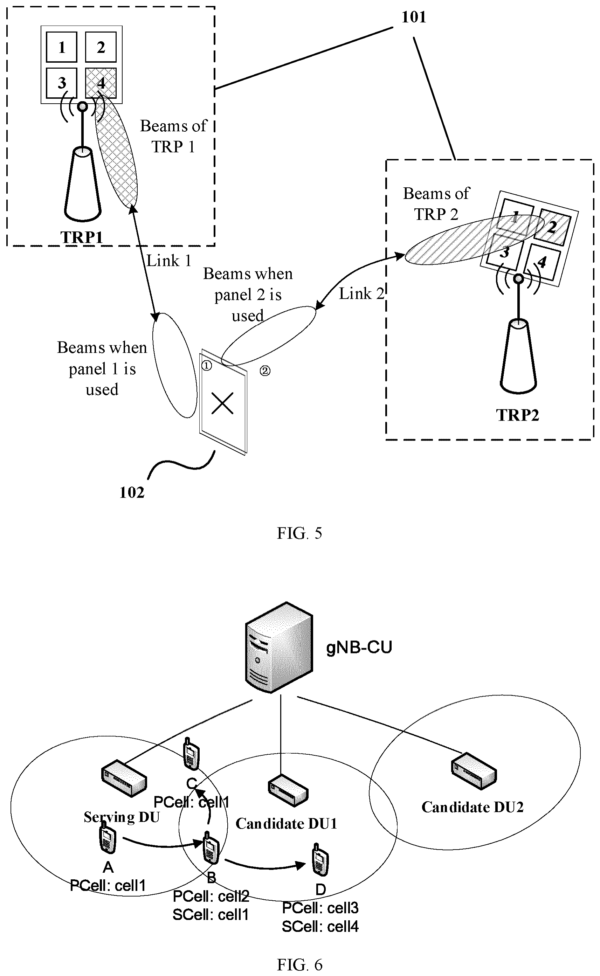

FIG. 5 is a schematic diagram of the scenario of multi-TRP operations. As shown in FIG. 5, in the multi-TRP operations, a serving cell may schedule the UE from 2 TRPs to provide better PDSCH coverage, reliability and/or data rate. For the multi-TRP, there are two different operating modes, single DCI and multiple DCI. For these two modes, within configuration provided by an RRC layer, control of uplink and downlink operations is performed by a physical layer and MAC. In the single DCI mode, the UE is scheduled by two TRPs via identical DCI, and in the multiple DCI mode, the UE is scheduled by separate DCI of each TRP. This embodiment is applicable to the mode of multiple DCI.

In the embodiments of this disclosure, the two TRPs may belong to identical cells or different cells.

As shown in FIG. 5, a gNB where TRP-2 is located is an additional node or device or entity, and a gNB where TRP-1 is located is a base station. TRP-2 and TRP-1 may belong to different gNBs, and may exchange information via an X2 interface; or, TRP-2 and TRP-1 may be a part of a gNB and belong to the same gNB, and exchange information via an internal interface.

FIG. 6 is a schematic diagram of a scenario of L1/L2-based inter-cell mobility.

When a terminal equipment moves from coverage area of a cell to coverage area of another cell, L1/L2 triggered serving cell change needs to be performed at a certain point. The scenario of L1/L2-based inter-cell mobility includes:
scenarios of inter-DU and intra-DU: design of L1/L2-based mobility of the intra-DU and inter-DU shall share as many commonalities as possible under reasonable circumstances;
switching, i.e. PCell mobility/change, involves non-CA (i.e. PCell only) and CA scenarios (i.e. PCell and SCell (s)), including that:
   a target PCell/target SCell (s) is/are not the current serving cell (i.e. a scenario where CA with PCell change>CA), such as the LTM from terminal B to terminal D in FIG. 6;
   the target SCell is the current PCell, such as the LTM from terminal A to terminal B in FIG. 6;
   the target PCell is a current SCell, such as the LTM from terminal B to terminal C in FIG. 6;
the CA scenario supports a PCell change without SCell changes and a PCell changes with SCell changes;
an NR-DC scenario is supported, at least for a PSCell change involving no MN, i.e. intra-SN;
Basically, inter-frequency scenarios (including mobility to an inter-frequency cell of a non-current serving cell) are supported, and if feasible, inter-frequency L1 measurement is supported.

In the embodiments of this disclosure, a source cell and a target cell may possibly be synchronous or asynchronous, and may operate on FR1 and FR2.

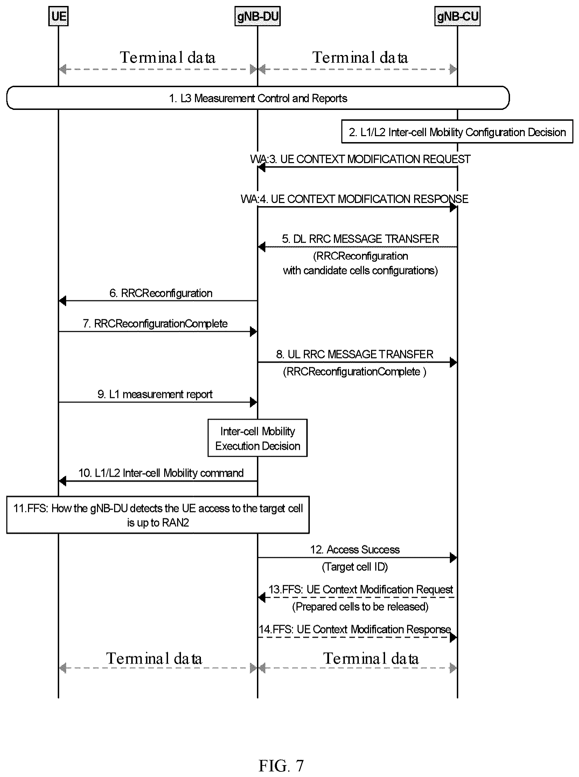

FIG. 7 is a schematic diagram of an intra-gNB-DU L1/L2-triggered mobility procedure. As shown in FIG. 7, when the terminal moves within the same gNB-DU, NR operations of L1/L2-triggered mobility include:
1. transmitting an *MeasurementReport* message including measurements of neighboring cells by the UE to the gNB-DU, and transmitting a UL RRC MESSAGE TRANSFER message carrying the received *MeasurementReport* message by a gNB-DU to a gNB-CU;
2. deciding by the gNB-CU to initiate configuration of L1/L2 inter-cell mobility;
3. assuming that the gNB-CU transmits a UE CONTEXT MODIFICATION REQUEST message to the gNB-DU to include a target candidate cell;
4. assuming that if a request for configuring L1/L2 inter-cell mobility is accepted, making response to the UE CONTEXT MODIFICATION REQUEST message by the gNB-DU, including generated agreed low-layer RRC configuration of the candidate cell;
5. transmitting a DL RRC MESSAGE TRANSFER message by the gNB-CU to the gNB-DU, including a generated *RRCReconfiguration* message carrying the configuration of L1/L2 inter-cell mobility;
6. transferring the received *RRCReconfiguration* message by the gNB-DU to the UE;
7. making response to the gNB-DU by the UE with an *RRCReconfigurationComplete* message;
8. transferring the *RRCReconfigurationComplete* message by the gNB-DU to the gNB-CU via a UL RRC MESSAGE TRANSFER message;
9. transmitting an L1 measurement result by the to the gNB-DU, and deciding to execute L1/L2 inter-cell mobility by the gNB-DU;
10. transmitting an L1/L2 inter-cell mobility command by the gNB-DU to the UE;
11. FFS: how the gNB-DU detects whether the UE accesses to a cell is dependent on RAN2;
12. indicating by the gNB-DU to the gNB-CU via an Access Success message that the UE successfully accesses the target cell, including a target cell ID;
13. FFS: the gNB-CU may transmit a UE Context Modification message to the gNB-DU to release prepared resources of the cell;
14. FFS: the gNB-DU makes response with a UE CONTEXT MODIFICATION RESPONSE message.

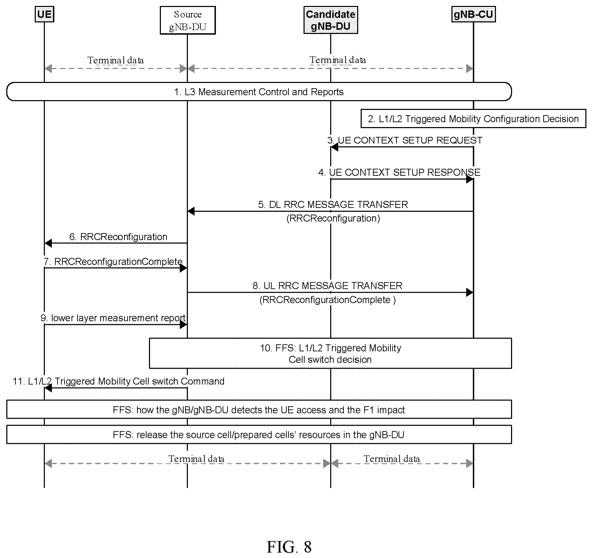

FIG. 8 is a schematic diagram of an inter-gNB-DU L1/L2-triggered mobility procedure. As shown in FIG. 8, when the terminal moves from a gNB-DU within the same gNB-CU to another gNB-DU, the NR operation procedure of L1/L2-triggered mobility includes:
1. transmitting a *MeasurementReport* message including measurements of neighboring cells by the UE to the source gNB-DU, and transmitting a UL RRC MESSAGE TRANSFER message carrying the received *MeasurementReport* message by the source gNB-DU to the gNB-CU;
2. deciding to initiate configuration of L1/L2 inter-cell mobility by the gNB-CU;
3. transmitting a UE CONTEXT SETUP REQUEST message by the gNB-CU to a candidate gNB-DU to include a target candidate cell;
4. making a response to the gNB-CU by the candidate gNB-DU with a UE CONTEXT SETUP RESPONSE message if it decides to accept the request for configuring LTM, including low-layer RRC configuration of the generated accepted target candidate cell;
5. transmitting a DL RRC MESSAGE TRANSFER (or UE CONTEXT MODIFICATION REQUEST) message by the gNB-CU to a source gNB-DU, including a generated *RRCReconfiguration* message carrying configuration of L1/L2 inter-cell mobility;
6. transferring the received *RRCReconfiguration* message by the source gNB-DU to the UE;
7. making a response to the gNB-DU source by the UE with an *RRCReconfigurationComplete* message;
8. transferring the *RRCReconfigurationComplete* message by the source gNB-DU to the gNB-CU via a UL RRC MESSAGE TRANSFER (or UE CONTEXT MODIFICATION RESPONSE) message;
9. transmitting a low-layer measurement result by the UE to the source gNB-DU;
10. deciding by the source gNB-DU to perform L1/L2-triggered mobility to a candidate target cell; and
11. transmitting a L1/L2-triggered mobility cell switch command by the source gNB-DU to the UE.

In the embodiments of this disclosure, L1 refers to layer 1, such as including a physical layer;
L2 refers to layer 2, which includes, for example, an MAC layer or an MAC sublayer, a PCCP layer or a PCCP sublayer, and an RLC layer or an RLC sublayer;
and L3 refers to layer 3, such as including an RRC layer.

Implementations of the embodiments of this disclosure shall be described below with reference to the accompanying drawings; however, these implementations are illustrative only, and are not intended to limit this disclosure.

### Embodiment 1

The embodiment of the first aspect provides a random access method, applicable to a terminal equipment, such as the terminal equipment 102 in FIG. 3.

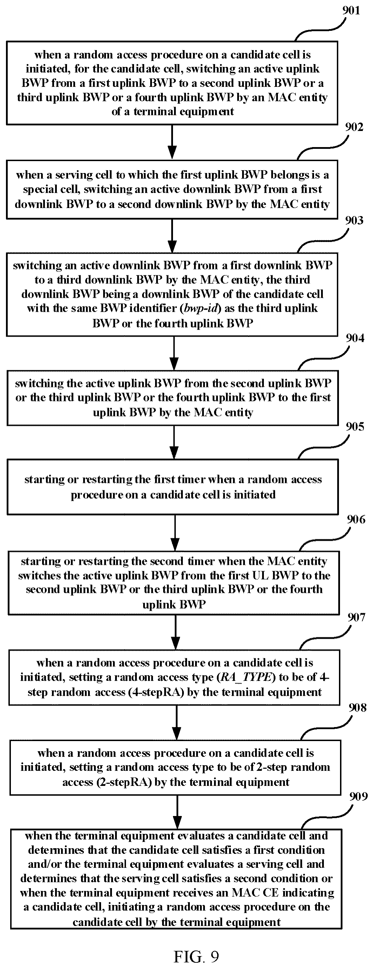

FIG. 9 is a schematic diagram of the random access method of embodiment 1 of this disclosure. As shown in FIG. 9, the method includes:
step 901: when a random access procedure on a candidate cell is initiated, for the candidate cell, switching an active uplink BWP from a first uplink BWP to a second uplink BWP or a third uplink BWP or a fourth uplink BWP by an MAC entity of a terminal equipment,
the second uplink BWP being an initial uplink BWP of the candidate cell or a serving cell associated with the candidate cell,
the third uplink BWP being an uplink BWP of the candidate cell configured with PRACH occasions,
and the fourth uplink BWP being an uplink BWP of the candidate cell indicated by a PDCCH.

Thus, the random access procedure may be performed on the candidate cell, thereby obtaining the latest uplink timing before performing cell change, and reducing interruption time of LTM.

In the embodiments of this disclosure, the expression 'switching... from... to... by the MAC entity of the terminal equipment' may be replaced with 'will switch... from... to... by the MAC entity of the terminal equipment' or 'will switch... to... by the MAC entity of the terminal equipment';
for example, the 'switching an active uplink BWP from a first uplink BWP to a second uplink BWP or a third uplink BWP or a fourth uplink BWP by an MAC entity of a terminal equipment' may also be replaced with 'will switch an active uplink BWP from a first uplink BWP to a second uplink BWP or a third uplink BWP or a fourth uplink BWP by an MAC entity of a terminal equipment'.

For another example, the 'switching an active uplink BWP from a first uplink BWP to a second uplink BWP or a third uplink BWP or a fourth uplink BWP by an MAC entity of a terminal equipment' may also be replaced with 'will switch an active uplink BWP to a second uplink BWP or a third uplink BWP or a fourth uplink BWP by an MAC entity of a terminal equipment'.

In the embodiments of this disclosure, the first uplink BWP is an active uplink BWP before BWP switch, and the second uplink BWP or the third uplink BWP or the fourth uplink BWP is an uplink BWP after BWP switch.

In the embodiments of this disclosure, the first uplink BWP is an active uplink BWP before a random access procedure is initiated/performed, and the second uplink BWP or the third uplink BWP or the fourth uplink BWP is an uplink BWP after a random access procedure is initiated/performed.

In the embodiments of this disclosure, a candidate cell may be replaced with a target candidate cell or a candidate configuration.

In the embodiments of this disclosure, the switching an active uplink BWP from a first uplink BWP to a second uplink BWP by an MAC entity of a terminal equipment includes: when an initial uplink BWP of the candidate cell is included in an initial UL BWP of a serving cell associated with the candidate cell, switching the active uplink BWP from the first uplink BWP to the initial uplink BWP of the serving cell associated with the candidate cell by the MAC entity.

That is, when the initial uplink BWP of the selected carrier of the candidate cell is included in the initial BWP of the selected carrier of the serving cell associated with the candidate cell, the MAC entity switches the active uplink BWP from the first uplink BWP to the initial uplink BWP of the selected carrier of the serving cell associated with the candidate cell. The selected carrier includes normal uplink (NUL) and supplementary uplink (SUL).

In the embodiments of this disclosure, the initial uplink BWP of the serving cell associated with the candidate cell is a BWP indicated by *initialUplinkBWP* or *initialUplinkBWP-RedCap.*

For example, when the terminal equipment is an RedCap UE and the serving cell associated with the candidate cell is configured with *initialUplinkBWP-RedCap,* the initial uplink BWP of the serving cell associated with the candidate cell is the BWP indicated by *initialUplinkBWP-RedCap* of the serving cell; and/or, when the terminal equipment is not an RedCap UE or the serving cell associated with the candidate cell is not configured with *initialUplinkBWP-RedCap,* the initial uplink BWP of the serving cell associated with the candidate cell is the BWP indicated by *initialUplinkBWP* of the serving cell.

That is, if the terminal equipment is an RedCap UE and the serving cell associated with the candidate cell is configure with *initialUplinkBWP-RedCap,* the initial UL BWP of (the selected carrier of) the serving cell associated with the candidate cell refers to the BWP indicated by *initialUplinkBWP-RedCap* of the serving cell; otherwise, the initial UL BWP of (the selected carrier of) the serving cell associated with the candidate cell refers to the BWP indicated by *initialUplinkBWP* of the serving cell.

In the embodiments of this disclosure, the switching an active uplink BWP from a first uplink BWP to a second uplink BWP by an MAC entity of a terminal equipment includes: when the initial uplink BWP of the candidate cell is not within the initial uplink BWP of the serving cell associated with the candidate cell, switching the active uplink BWP from the first uplink BWP to the initial uplink BWP of the candidate cell by the MAC entity.

That is, when the initial uplink BWP of the selected carrier of the candidate cell is not within the initial BWP of the selected carrier of the serving cell associated with the candidate cell, the MAC entity switches the active uplink BWP from the first uplink BWP to the initial uplink BWP of the selected carrier of the candidate cell.

In the embodiments of this disclosure, the initial uplink BWP of the candidate cell is a BWP indicated by *initialUplinkBWP* or *initialUplinkBWP-RedCap.*

For example, when the terminal equipment is an RedCap UE and the candidate cell is configured with *initialUplinkBWP-RedCap,* the initial uplink BWP of the candidate cell is the BWP indicated by *initialUplinkBWP-RedCap* of the candidate cell; and/or, when the terminal equipment is not an RedCap UE or the candidate cell is not configured with *initialUplinkBWP-RedCap,* the initial uplink BWP of the candidate cell is the BWP indicated by *initialUplinkBWP* of the candidate cell.

That is, if the candidate cell is configured with *initialUplinkBWP-RedCap* and the terminal is an RedCap UE, the initial UL BWP of (the selected carrier of) the candidate cell refers to the BWP indicated by *initialUplinkBWP-RedCap* of the candidate cell; otherwise, the initial UL BWP of (the selected carrier of) the candidate cell refers to the BWP indicated by *initialUplinkBWP* of the candidate cell.

In the embodiments of this disclosure, the switching an active uplink BWP from a first uplink BWP to a third uplink BWP by an MAC entity of a terminal equipment includes: in a case where multiple uplink BWPs of the candidate cell are configured with PRACH occasions, selecting an uplink BWP in the multiple uplink BWPs and switching the active uplink BWP from the first uplink BWP to the selected uplink BWP by the terminal equipment.

For example, in the case where multiple uplink BWPs of the candidate cell are configured with PRACH occasions, the terminal equipment selects an uplink BWP in the multiple uplink BWPs based on implementation and switches the active uplink BWP from the first uplink BWP to the selected uplink BWP.

In the embodiments of this disclosure, the switching an active uplink BWP from a first uplink BWP to a fourth uplink BWP by an MAC entity of a terminal equipment includes: indicating BWP information by a PDCCH or DCI received by the terminal equipment that triggers a random access procedure.

For example, the BWP information includes a UL BWP ID and/or a DL BWP ID.

Implementations of the BWP operations in step 901 may be combined with different conditions, so as to perform switch from the first uplink BWP to at least one of the second uplink BWP, the third uplink BWP and the fourth uplink BWP. Following are some examples.

Example 1: when a random access procedure on a candidate cell is initiated, for (the selected carrier of) the candidate cell, the MAC entity will,
if the random access procedure is a random access procedure triggered by a PDCCH order, switch the active uplink BWP from the first uplink BWP to the fourth uplink BWP, that is, switch the active UL BWP to a UL BWP of the candidate cell indicated by the PDCCH;
otherwise, switch the active uplink BWP from the first uplink BWP to the third uplink BWP, that is, switch the active UL BWP to a UL BWP of the candidate cell configuring PRACH occasions.

Example 2: when a random access procedure on a candidate cell is initiated, the MAC entity will,
if the random access procedure is a random access procedure triggered by a PDCCH order, switch the active uplink BWP from the first uplink BWP to the fourth uplink BWP, that is, switch the active UL BWP to a UL BWP of the candidate cell indicated by the PDCCH;
otherwise, switch the active uplink BWP from the first uplink BWP to the initial UL BWP of the candidate cell in the second uplink BWP, that is, switch the active UL BWP to the initial UL BWP of the candidate cell.

Example 3: when a random access procedure on a candidate cell is initiated, for (the selected carrier of) the candidate cell, the MAC entity will,
if the random access procedure is a random access procedure triggered by a PDCCH order, switch the active uplink BWP from the first uplink BWP to the fourth uplink BWP, that is, switch the active UL BWP to a UL BWP of the candidate cell indicated by the PDCCH;
otherwise, if the initial UL BWP of the candidate cell is included in the initial UL BWP of the serving cell, switch the active uplink BWP from the first uplink BWP to the initial UL BWP of (the selected carrier of) the serving cell associated with the candidate cell in the second uplink BWP, that is, switch the active UL BWP to the initial UL BWP of (the selected carrier of) the serving cell associated with the candidate cell;
otherwise, switch the active uplink BWP from the first uplink BWP to the initial UL BWP of the candidate cell in the second uplink BWP, that is, switch the active UL BWP to the initial UL BWP of the candidate cell.

Example 4: when a random access procedure on a candidate cell is initiated, for (the selected carrier of) the candidate cell, the MAC entity will,
if the initial UL BWP of the candidate cell is included in the initial UL BWP of the serving cell, switch the active uplink BWP from the first uplink BWP to the initial UL BWP of (the selected carrier of) the serving cell associated with the candidate cell in the second uplink BWP, that is, switch the active UL BWP to the initial UL BWP of (the selected carrier of) the serving cell associated with the candidate cell;
otherwise, if a UL BWP of the candidate cell configuring PRACH occasions is included in a UL BWP of the serving cell, switch the active UL BWP to the UL BWP of the serving cell.

In the embodiments of this disclosure, a switching mechanism of an active downlink BWP is similar to that of the active uplink BWP.

For example, as shown in FIG. 9, the method further includes:
step 902: when a serving cell to which the first uplink BWP belongs is a special cell, switching an active downlink BWP from a first downlink BWP to a second downlink BWP by the MAC entity.

In the embodiments of this disclosure, the first downlink BWP is an active downlink BWP before BWP switch, and the second downlink BWP is an active downlink BWP after BWP switch.

In the embodiments of this disclosure, the first downlink BWP is an active downlink BWP before random access is initiated/performed, and the second downlink BWP is an active downlink BWP after random access is initiated/performed.

In the embodiments of this disclosure, when a serving cell to which the first uplink BWP belongs is a special cell, switching an active downlink BWP from a first downlink BWP to a second downlink BWP by the MAC entity, includes: when the initial uplink BWP of the candidate cell is included in the initial uplink BWP of the serving cell associated with the candidate cell and/or the initial downlink BWP of the candidate cell is included in the initial downlink BWP of the serving cell associated with the candidate cell and the serving cell to which the first uplink BWP belongs is a special cell, switching the active downlink BWP from the first downlink BWP to the second downlink BWP by the MAC entity, the second downlink BWP being the initial downlink BWP of the serving cell associated with the candidate cell.

In the embodiments of this disclosure, the initial downlink BWP of the serving cell associated with the candidate cell is a BWP indicated by *initialDownlinkBWP* or *initialDownlinkBWP-RedCap.*

For example, when the terminal equipment is an RedCap UE and the serving cell associated with the candidate cell is configured with *initialDownlinkBWP-RedCap,* the initial downlink BWP of the serving cell associated with the candidate cell is the BWP indicated by *initialDownlinkBWP-RedCap* of the serving cell; and/or, when the terminal equipment is not an RedCap UE or the serving cell associated with the candidate cell is not configured with *initialDownlinkBWP-RedCap,* the initial downlink BWP of the serving cell associated with the candidate cell is the BWP indicated by *initialDownlinkBWP* of the serving cell.

In the embodiments of this disclosure, when a serving cell to which the first uplink BWP belongs is a special cell, switching an active downlink BWP from a first downlink BWP to a second downlink BWP by the MAC entity, includes: when the initial uplink BWP of the candidate cell is not within the initial uplink BWP of the serving cell associated with the candidate cell and/or the initial downlink BWP of the candidate cell is not within the initial downlink BWP of the serving cell associated with the candidate cell and the serving cell to which the first uplink BWP belongs is a special cell, switching the active downlink BWP from the first downlink BWP to the second downlink BWP by the MAC entity, the second downlink BWP being the initial downlink BWP of the candidate cell.

In the embodiments of this disclosure, the initial downlink BWP of the candidate cell is the BWP indicated by *initialDownlinkBWP* or *initialDownlinkBWP-RedCap.*

For example, when the terminal equipment is an RedCap UE and the candidate cell is configured with *initialDownlinkBWP-RedCap,* the initial downlink BWP of the candidate cell is the BWP indicated by *initialDownlinkBWP-RedCap* of the candidate cell; and/or, when the terminal equipment is not an RedCap UE or the candidate cell is not configured with *initialDownlinkBWP-RedCap,* the initial downlink BWP of the candidate cell is the BWP indicated by *initialDownlinkBWP* of the candidate cell.

For example, as shown in FIG. 9, the method further includes:
step 903: switching an active downlink BWP from a first downlink BWP to a third downlink BWP by the MAC entity, the third downlink BWP being a downlink BWP of the candidate cell with the same BWP identifier (*bwp-id*) as the third uplink BWP or the fourth uplink BWP.

In the embodiments of this disclosure, the first downlink BWP is an active downlink BWP before BWP switching, and the third downlink BWP is an active downlink BWP after BWP switching.

In the embodiments of this disclosure, the first downlink BWP is an active downlink BWP before random access is initiated/performed, and the third downlink BWP is an active downlink BWP after random access is initiated.

In the embodiments of this disclosure, when the terminal equipment receives a random access response from the candidate cell, or when the terminal equipment receives a network instruction for receiving a random access response from the candidate cell, the MAC entity switches the active downlink BWP from the first downlink BWP to the third downlink BWP.

In the embodiments of this disclosure, the MAC entity may also switch the active uplink BWP back to an original uplink BWP.

For example, as shown in FIG. 9, the method further includes:
step 904: switching the active uplink BWP from the second uplink BWP or the third uplink BWP or the fourth uplink BWP to the first uplink BWP by the MAC entity.

In the embodiments of this disclosure, when a first timer expires and/or a second timer expires, the MAC entity switches the active uplink BWP to the first uplink BWP.

In the embodiments of this disclosure, as shown in FIG. 9, the method further includes:
step 905: starting or restarting the first timer when a random access procedure on a candidate cell is initiated; and/or,
step 906: starting or restarting the second timer when the MAC entity switches the active uplink BWP from the first UL BWP to the second uplink BWP or the third uplink BWP or the fourth uplink BWP.

In the embodiments of this disclosure, steps 902-906 are optional.

Furthermore, step 904 and/or step 905 is/are performed before step 906, and timing relationships between other steps are not limited.

In the embodiments of this disclosure, the method may also be combined with steps of setting random access types by the terminal equipment.

For example, as shown in FIG. 9, the method further includes:
step 907: when a random access procedure on a candidate cell is initiated, setting a random access type (*RA_TYPE*) to be of 4-step random access (4-stepRA) by the terminal equipment; or
step 908: when a random access procedure on a candidate cell is initiated, setting a random access type to be of 2-step random access (2-stepRA) by the terminal equipment, an identifier of the terminal equipment in the candidate cell being included in a PUSCH of an MSGA.

Hence, the terminal equipment may select a random access type, so as to obtain latest uplink timing before executing cell changes, thereby reducing interruption time of LTM.

In the embodiments of this disclosure, in step 907, the when a random access procedure on a candidate cell is initiated, setting a random access type by the terminal equipment to be of 4-step random access, includes: when the random access procedure on the candidate cell is initiated by a PDCCH order and/or the random access procedure on the candidate cell is initiated to obtain timing advance (TA) of the candidate cell, setting the random access type by the terminal equipment to be of 4-step random access.

For example, the identifier of the terminal equipment in the candidate cell is included in a candidate configuration.

In the embodiments of this disclosure, in step 908, the setting a random access type by the terminal equipment to be of 2-step random access (2-stepRA) includes: for the second uplink BWP or the third uplink BWP or the fourth uplink BWP, when an RRC message and/or a PDCCH only explicitly provide(s) contention-free random access resources of 2-step random access within a selected random access resource group, setting the random access type by the terminal equipment to be of 2-step random access.

In the embodiments of this disclosure, the identifier is a C-RNTI (cell radio network temporary identifier, Cell-RadioNetworkTemporaryIdentifier), that is, the identifier of the terminal equipment in the candidate cell is the C-RNTI of the terminal equipment in the candidate cell.

In the embodiments of this disclosure, the method may also be combined with steps of initiating a random access procedure by the terminal equipment.

For example, as shown in FIG. 9, the method further includes:
step 909: when the terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, initiating a random access procedure on the candidate cell by the terminal equipment.

Hence, even in case of rapid changes in link quality of the candidate cell, the terminal equipment may be instructed to initiate a random access procedure on a candidate cell with good link quality, so as to acquire a TA value on a candidate cell with good link quality.

In the embodiments of this disclosure, the candidate cell is configured by RRC.

In the embodiments of this disclosure, the candidate cell is a target cell for layer 1/layer 2-triggered mobility (LTM).

Or, the candidate cell is a cell to which an additional PCI corresponds in a multi-TRP scenario.

In the embodiments of this disclosure, the first condition includes at least one of the following conditions that:
a layer 1 measurement result of a downlink reference signal (DL RS) of the candidate cell is better than a layer 1 measurement result of a downlink reference signal of the serving cell;
the layer 1 measurement result of the downlink reference signal of the candidate cell is better than a configured first threshold;
under a current serving cell, the terminal equipment has not initiated a random access procedure on the candidate cell;
under the current serving cell, a preset time from initiating a random access procedure on the candidate cell by the terminal equipment for obtaining timing advance has passed; and
a timer corresponding to a timing advance group to which the candidate cell belongs expires.

In the embodiments of this disclosure, that the layer 1 measurement result of a downlink reference signal (DL RS) of the candidate cell is better than a layer 1 measurement result of a downlink reference signal of the serving cell includes that the layer 1 measurement result of the downlink reference signal (DL RS) of the candidate cell is better than the layer 1 measurement result of the downlink reference signal of the serving cell by a first offset and/or by lasting for a first time.

For example, the downlink reference signal of the serving cell is a current downlink reference signal of the serving cell.

In the embodiments of this disclosure, that the layer 1 measurement result of a downlink reference signal of the candidate cell is better than a configured first threshold includes that: the layer 1 measurement result of the downlink reference signal of the candidate cell is better than the configured first threshold by a second offset and/or by lasting for a second time.

In the embodiments of this disclosure, the second condition includes at least one of the following conditions that:
the layer 1 measurement result of the downlink reference signal is worse than a configured second threshold; and
a radio link failure is detected.

For example, that the layer 1 measurement result of the downlink reference signal is worse than a configured second threshold includes that: the layer 1 measurement result of the downlink reference signal is worse than the configured second threshold by a third offset and/or by lasting for a third time.

For example, for the first condition and/or the second condition, the downlink reference signal is an SSB and/or a CSI-RS, and/or, the downlink reference signal is configured with a corresponding random access resource, and/or, the layer 1 measurement result is RSRP or an SINR.

For example, for the first condition, the DL RS of the serving cell is an SSB in an SSB configuration in a serving cell configuration that does not include or is not associated with a PCI different from the PCI of the serving cell, or a CSI-RS that has a QCL relationship with the SSB.

For example, for the second condition, the SSB configuration in the serving cell configuration does not include or is not associated with an SSB of a PCI different from the PCI of the serving cell or a CSI-RS with a QCL relationship to the SSB.

For example, the MAC CE is a layer 1/layer 2-triggered mobility cell switch command.

For example, the MAC CE does not include timing advance of an indicated cell, and/or, the MAC CE includes information on a random access resource and/or a downlink reference signal of an indicated cell, and/or, the MAC CE includes information on a random access preamble (RA preamble) of an indicated cell.

Following are some examples of implementation of initiation of the random access procedure in step 909.

### Example 1:

When the terminal equipment evaluates candidate cells and determines that a candidate cell satisfies a third condition and/or the terminal equipment evaluates a serving cell and determines that the serving cell satisfies a fourth condition, the terminal equipment initiates a random access procedure on the cell.

In the embodiments of this disclosure, the third condition at least includes that the terminal equipment has not initiated a random access procedure on the candidate cell.

The random access procedure may be used for acquisition of an initial TA by the terminal equipment on the LTM candidate cell.

### Example 2:

When the terminal equipment evaluates candidate cells and determines that a candidate cell satisfies a third condition and/or the terminal equipment evaluates a serving cell and determines that the serving cell satisfies a fourth condition, the terminal equipment initiates a random access procedure on the candidate cell.

In the embodiments of this disclosure, the third condition at least includes that the time T has passed since the terminal equipment initiated the random access procedure on the candidate cell to obtain timing advance (for example, when the terminal equipment initiates the random access procedure on the candidate cell, a timer T1 is started or restarted, and each candidate cell maintains a timer; and when the timer T1 expires, the terminal equipment initiates a random access procedure on the candidate cell) or a timer corresponding to a timing advance group to which the candidate cell belongs expires.

This random access procedure may be used for TA updates on LTM candidate cells.

### Example 3:

When the terminal equipment evaluates candidate cells and determines that a candidate cell satisfies a third condition and/or the terminal equipment evaluates a serving cell and determines that the serving cell satisfies a fourth condition, the terminal equipment initiates a random access procedure on the candidate cell. The candidate cell is a non-serving cell associated with the serving cell, such as a cell, a PCI of which being included in an SSB configuration of the serving cell configuration. The random access procedure is a random access procedure on a TRP to which an additional PCI belongs in a multi-TRP multi-DCI scenario. The random access procedure may be used for TA acquisition and/TA updates on the TRP to which the additional PCI belongs in the multi-TRP multi-DCI scenario.

In the embodiments of this disclosure, the third condition includes at least one of the following that:
1) an L1 measurement result of the DL RS is better than that of the DL RS of the serving cell, or the L1 measurement result of the DL RS is better than that of the DL RS of the serving cell by a third offset 1 and/or by lasting for a third time;
   For example, the DL RS may be an SSB and/or a CSI-RS. For example, the DL RS of the serving cell is an SSB in the SSB configuration of the serving cell configuration that does not include or is not associated with a PCI different from the PCI of the serving cell or a CSI-RS that has a QCL relationship with the SSB;
   for example, the DL RS configures corresponding dedicated random access resources;
   for example, the L1 measurement result may be RSRP or an SINR.
2) The L1 measurement result of the DL RS is better than the configured third threshold, or the L1 measurement result of the DL RS is better than the configured third threshold by a fourth offset and/or by lasting for a fourth time;
   for example, the DL RS may be an SSB and/or a CSI-RS;
   for example, the DL RS configures corresponding dedicated random access resources;
   for example, the L1 measurement result may be RSRP or an SINR.
3) In the current serving cell, the terminal equipment has not yet initiated a random access procedure on the candidate cell;
4) In the current serving cell, time T has passed since the terminal equipment initiated the random access procedure on the candidate cell to obtain timing advance;
   for example, the timer corresponding to the timing advance group to which the candidate cell belongs expires.

In the embodiments of this disclosure, the fourth condition includes at least one of the following that:
an L1 measurement result of the DL RS is worse than the configured fourth threshold, or, an L1 measurement result of the DL RS is worse than the configured fourth threshold by a fifth offset and/or by lasting for a fifth time.

For example, the DL RS may be an SSB and/or a CSI-RS.

For example, the SSB configuration of the serving cell configuration does not include or is not associated with an SSB of a PCI different from the PCI of the serving cell or a CSI-RS that has a QCL relationship with the SSB.

In the embodiments of this disclosure, each of steps 901-909 may be used individually, or may be used in various combinations as needed, and manners of combining these steps are not limited in the embodiments of this disclosure.

It can be seen from the above embodiment that when a random access procedure on a candidate cell is initiated, for the candidate cell, an MAC entity of a terminal equipment switches an active uplink BWP from a first uplink BWP to a second uplink BWP or a third uplink BWP or a fourth uplink BWP, hence, a random access procedure may be performed on the candidate cell, thereby acquiring latest uplink timing before performing cell change, and reducing interruption time of LTM;
in addition, when a random access procedure on a candidate cell is initiated, the terminal equipment sets a random access type to be of 4-step random access (2-stepRA), or, when a random access procedure on a candidate cell is initiated, the terminal equipment sets a random access type to be of 2-step random access (2-stepRA), and an identifier of the terminal equipment in the candidate cell is included in a PUSCH of an MSGA; hence, the terminal equipment is able to select a random access type, thereby acquiring latest uplink timing before performing cell change, and reducing interruption time of LTM;
furthermore, when the terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, the terminal equipment initiates a random access procedure on the candidate cell; hence, in case of rapid changes in link quality of the candidate cell, the terminal is instructed to initiate a random access procedure on a candidate cell with good link quality, thereby acquiring a TA value on the candidate cell with good link quality.

### Embodiment 2

The embodiments of this disclosure provides a random access method, applicable to a terminal equipment, such as the terminal equipment 102 in FIG. 3.

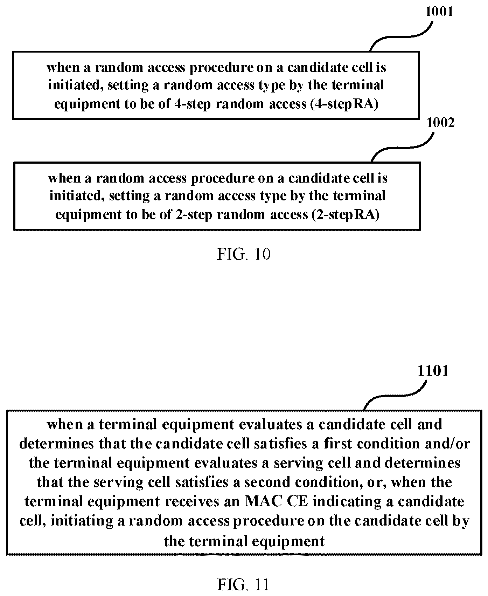

FIG. 10 is a schematic diagram of the random access method of embodiment 2 of this disclosure. As shown in FIG. 10, the method includes:
step 1001: when a random access procedure on a candidate cell is initiated, setting a random access type by the terminal equipment to be of 4-step random access (4-stepRA); or
step 1002: when a random access procedure on a candidate cell is initiated, setting a random access type by the terminal equipment to be of 2-step random access (2-stepRA), and an identifier of the terminal equipment in the candidate cell being included in a PUSCH of an MSGA.

Thus, the terminal equipment may select a random access type, thereby obtaining the latest uplink timing before performing cell change, and reducing interruption time of LTM.

In the embodiments of this disclosure, in step 1001, the when a random access procedure on a candidate cell is initiated, setting a random access type by a terminal equipment to be of 4-step random access, includes: when the random access procedure on the candidate cell is initiated by a PDCCH order and/or the random access procedure on the candidate cell is initiated to obtain timing advance (TA) of the candidate cell, setting the random access type by the terminal equipment to be of 4-step random access.

For example, the identifier of the terminal equipment in the candidate cell is included in a candidate configuration.

In the embodiments of this disclosure, in step 1002, the setting a random access type by the terminal equipment to be of 2-step random access (2-stepRA) includes: for the second uplink BWP or the third uplink BWP or the fourth uplink BWP, when an RRC message and/or a PDCCH explicitly provide(s) contention-free random access resources of 4-step random access and 2-step random access within a selected random access resource group and reference signal received power (RSRP) of a downlink path-loss reference is greater than a preset threshold, setting the random access type by the terminal equipment to be of 2-step random access.

For example, the preset threshold is *msgA-RSRP-Threshold.*

In the embodiments of this disclosure, in step 1002, the setting a random access type by the terminal equipment to be of 2-step random access (2-stepRA) includes: for the second uplink BWP or the third uplink BWP or the fourth uplink BWP, when an RRC message and/or a PDCCH only explicitly provide(s) contention-free random access resources of 2-step random access within a selected random access resource group, setting the random access type by the terminal equipment to be of 2-step random access.

In the embodiments of this disclosure, the identifier is a C-RNTI (cell radio network temporary identifier, Cell-RadioNetworkTemporaryIdentifier), that is, the identifier of the terminal equipment in the candidate cell is the C-RNTI of the terminal equipment in the candidate cell.

In the embodiments of this disclosure, reference may be made to embodiment 1 for contents in embodiment 2 related to those in embodiment 1.

It can be seen from the above embodiment that when a random access procedure on a candidate cell is initiated, the terminal equipment sets a random access type to be of 4-step random access (2-stepRA), or, when a random access procedure on a candidate cell is initiated, the terminal equipment sets a random access type to be of 2-step random access (2-stepRA), and an identifier of the terminal equipment in the candidate cell is included in a PUSCH of an MSGA; hence, the terminal equipment is able to select a random access type, thereby acquiring latest uplink timing before performing cell change, and reducing interruption time of LTM.

### Embodiment 3

The embodiments of this disclosure provides a random access method, applicable to a terminal equipment, such as the terminal equipment 102 in FIG. 3.

FIG. 11 is a schematic diagram of the random access method of embodiment 3 of this disclosure. As shown in FIG. 11, the method includes:
step 1101: when a terminal equipment evaluates a candidate cell and determines that the candidate cell satisfies a first condition and/or the terminal equipment evaluates a serving cell and determines that the serving cell satisfies a second condition, or, when the terminal equipment receives an MAC CE indicating a candidate cell, initiating a random access procedure on the candidate cell by the terminal equipment.

Hence, in case of rapid changes in link quality of the candidate cell, the terminal is instructed to initiate a random access procedure on a candidate cell with good link quality, thereby acquiring a TA value on the candidate cell with good link quality.

In the embodiments of this disclosure, the candidate cell is configured by RRC.

In the embodiments of this disclosure, the candidate cell is a target cell used for layer 1/layer 2 triggered mobility (LTM).

Or, the candidate cell is a cell to which an additional PCI corresponds in a multi-TRP scenario.

In the embodiments of this disclosure, the first condition includes at least one of the following conditions that:
a layer 1 measurement result of a downlink reference signal (DL RS) of the candidate cell is better than a layer 1 measurement result of a downlink reference signal of the serving cell;
the layer 1 measurement result of the downlink reference signal of the candidate cell is better than a configured first threshold;
under a current serving cell, the terminal equipment has not initiated a random access procedure on the candidate cell;
under the current serving cell, a preset time from initiating a random access procedure on the candidate cell by the terminal equipment for obtaining timing advance has passed; and
a timer corresponding to a timing advance group to which the candidate cell belongs expires.

In the embodiments of this disclosure, that the layer 1 measurement result of a downlink reference signal (DL RS) of the candidate cell is better than a layer 1 measurement result of a downlink reference signal of the serving cell includes that the layer 1 measurement result of the downlink reference signal (DL RS) of the candidate cell is better than the layer 1 measurement result of the downlink reference signal of the serving cell by a first offset and/or by lasting for a first time.

For example, the downlink reference signal of the serving cell is a current downlink reference signal of the serving cell.

In the embodiments of this disclosure, that the layer 1 measurement result of a downlink reference signal of the candidate cell is better than a configured first threshold includes that: the layer 1 measurement result of the downlink reference signal of the candidate cell is better than the configured first threshold by a second offset and/or by lasting for a second time.

In the embodiments of this disclosure, the second condition includes at least one of the following conditions that:
the layer 1 measurement result of the downlink reference signal is worse than a configured second threshold; and
a radio link failure is detected.

For example, that the layer 1 measurement result of the downlink reference signal is worse than a configured second threshold includes that: the layer 1 measurement result of the downlink reference signal is worse than the configured second threshold by a third offset and/or by lasting for a third time.

For example, for the first condition and/or the second condition, the downlink reference signal is an SSB and/or a CSI-RS, and/or, the downlink reference signal is configured with a corresponding random access resource, and/or, the layer 1 measurement result is RSRP or an SINR.

For example, the MAC CE is a layer 1/layer 2-triggered mobility cell switch command.

For example, the MAC CE does not include timing advance of an indicated cell, and/or, the MAC CE includes information on a random access resource and/or a downlink reference signal of an indicated cell, and/or, the MAC CE includes information on a random access preamble (RA preamble) of an indicated cell.

It can be seen from the above embodiment that when the terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, the terminal equipment initiates a random access procedure on the candidate cell; hence, in case of rapid changes in link quality of the candidate cell, the terminal is instructed to initiate a random access procedure on a candidate cell with good link quality, thereby acquiring a TA value on the candidate cell with good link quality.

### Embodiment 4

The embodiments of this disclosure provides a random access apparatus, provided in a terminal equipment. As a principle of the apparatus for solving problems is similar to that of the method in embodiment 1, reference may be made to the implementation of the method described in embodiment 1 for implementation of the apparatus, with identical contents being not going to be described herein any further.

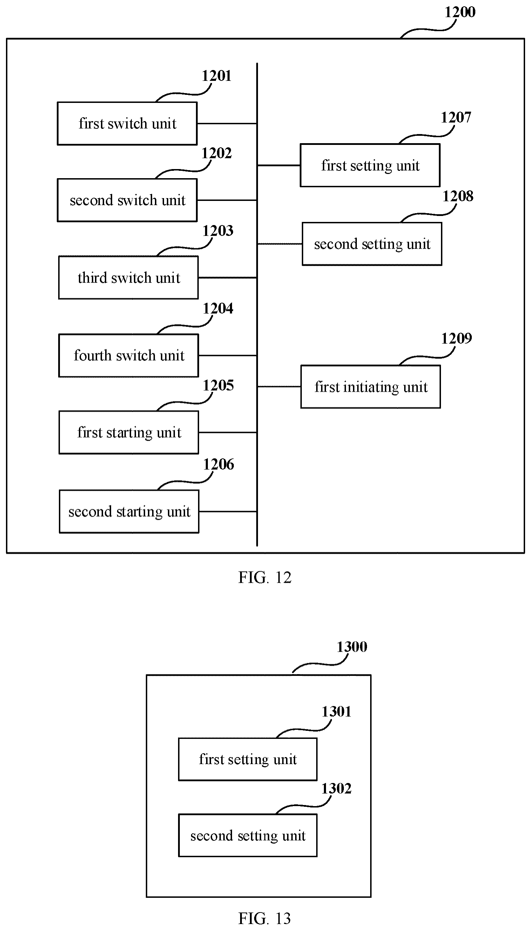

FIG. 12 is a schematic diagram of the random access apparatus in embodiment 4 of this disclosure. As shown in FIG. 12, an apparatus 1200 includes:
a first switch unit 1201 configured to, when a random access procedure on a candidate cell is initiated, for the candidate cell, switch an active uplink BWP from a first uplink BWP to a second uplink BWP or a third uplink BWP or a fourth uplink BWP by an MAC entity of a terminal equipment,
the second uplink BWP being an initial uplink BWP of the candidate cell or a serving cell associated with the candidate cell, the third uplink BWP being an uplink BWP of the candidate cell configured with PRACH occasions, and the fourth uplink BWP being an uplink BWP of the candidate cell indicated by a PDCCH.

In the embodiments of this disclosure, the switching an active uplink BWP from a first uplink BWP to a second uplink BWP by an MAC entity of a terminal equipment includes: when the initial uplink BWP of the candidate cell is included in the initial uplink BWP of the serving cell associated with the candidate cell, switching the active uplink BWP from the first uplink BWP to the initial uplink BWP of the serving cell associated with the candidate cell by the MAC entity.

In the embodiments of this disclosure, the initial uplink BWP of the serving cell associated with the candidate cell is a BWP indicated by *initialUplinkBWP* or *initialUplinkBWP-RedCap.*

In the embodiments of this disclosure, when the terminal equipment is an RedCap UE and the serving cell associated with the candidate cell is configured with *initialUplinkBWP-RedCap,* the initial uplink BWP of the serving cell associated with the candidate cell is the BWP indicated by *initialUplinkBWP-RedCap* of the serving cell; and/or, when the terminal equipment is not an RedCap UE or the serving cell associated with the candidate cell is not configured with *initialUplinkBWP-RedCap,* the initial uplink BWP of the serving cell associated with the candidate cell is the BWP indicated by *initialUplinkBWP* of the serving cell.

In the embodiments of this disclosure, the switching an active uplink BWP from a first uplink BWP to a second uplink BWP by an MAC entity of a terminal equipment includes: when the initial uplink BWP of the candidate cell is not within the initial uplink BWP of the serving cell associated with the candidate cell, switching the active uplink BWP from the first uplink BWP to the initial uplink BWP of the candidate cell by the MAC entity.

In the embodiments of this disclosure, the initial uplink BWP of the candidate cell is a BWP indicated by *initialUplinkBWP* or *initialUplinkBWP-RedCap.*

In the embodiments of this disclosure, when the terminal equipment is an RedCap UE and the candidate cell is configured with *initialUplinkBWP-RedCap,* the initial uplink BWP of the candidate cell is the BWP indicated by *initialUplinkBWP-RedCap* of the candidate cell; and/or, when the terminal equipment is not an RedCap UE or the candidate cell is not configured with *initialUplinkBWP-RedCap,* the initial uplink BWP of the candidate cell is the BWP indicated by *initialUplinkBWP* of the candidate cell.

In the embodiments of this disclosure, the switching an active uplink BWP from a first uplink BWP to a third uplink BWP by an MAC entity of a terminal equipment includes: in a case where multiple uplink BWPs of the candidate cell are configured with PRACH occasions, selecting an uplink BWP in the multiple uplink BWPs and switching the active uplink BWP from the first uplink BWP to the selected uplink BWP by the terminal equipment.

In the embodiments of this disclosure, in a case where multiple uplink BWPs of the candidate cell are configured with PRACH occasions, the terminal equipment selects an uplink BWP in the multiple uplink BWPs and switches the active uplink BWP from the first uplink BWP to the selected uplink BWP.

In the embodiments of this disclosure, the switching an active uplink BWP from a first uplink BWP to a fourth uplink BWP by an MAC entity of a terminal equipment includes: indicating BWP information by a PDCCH or DCI received by the terminal equipment that triggers a random access procedure.

In the embodiments of this disclosure, as shown in FIG. 12, the apparatus further includes:
a second switch unit 1202 configured to, when a serving cell to which the first uplink BWP belongs is a special cell, switch an active downlink BWP from a first downlink BWP to a second downlink BWP by the MAC entity.

In the embodiments of this disclosure, the second switch unit 1202 is configured to, when the initial uplink BWP of the candidate cell is included in the initial uplink BWP of the serving cell associated with the candidate cell and/or the initial downlink BWP of the candidate cell is included in the initial downlink BWP of the serving cell associated with the candidate cell and the serving cell to which the first uplink BWP belongs is a special cell, switch the active downlink BWP from the first downlink BWP to the second downlink BWP, the second downlink BWP being the initial downlink BWP of the serving cell associated with the candidate cell.

In the embodiments of this disclosure, the initial downlink BWP of the serving cell associated with the candidate cell is a BWP indicated by *initialDownlinkBWP* or *initialDownlinkBWP-RedCap.*

In the embodiments of this disclosure, when the terminal equipment is an RedCap UE and the serving cell associated with the candidate cell is configured with *initialDownlinkBWP-RedCap,* the initial downlink BWP of the serving cell associated with the candidate cell is the BWP indicated by *initialDownlinkBWP-RedCap* of the serving cell; and/or, when the terminal equipment is not an RedCap UE or the serving cell associated with the candidate cell is not configured with *initialDownlinkBWP-RedCap,* the initial downlink BWP of the serving cell associated with the candidate cell is the BWP indicated by *initialDownlinkBWP* of the serving cell.

In the embodiments of this disclosure, the second switch unit 1202 is configured to, when the initial uplink BWP of the candidate cell is not within the initial uplink BWP of the serving cell associated with the candidate cell and/or the initial downlink BWP of the candidate cell is not within the initial downlink BWP of the serving cell associated with the candidate cell and the serving cell to which the first uplink BWP belongs is a special cell, switch the active downlink BWP from the first downlink BWP to the second downlink BWP, the second downlink BWP being the initial downlink BWP of the candidate cell.

In the embodiments of this disclosure, the initial downlink BWP of the candidate cell is the BWP indicated by *initialDownlinkBWP* or *initialDownlinkBWP-RedCap.*

In the embodiments of this disclosure, when the terminal equipment is an RedCap UE and the candidate cell is configured with *initialDownlinkBWP-RedCap,* the initial downlink BWP of the candidate cell is the BWP indicated by *initialDownlinkBWP-RedCap* of the candidate cell; and/or, when the terminal equipment is not an RedCap UE or the candidate cell is not configured with *initialDownlinkBWP-RedCap,* the initial downlink BWP of the candidate cell is the BWP indicated by *initialDownlinkBWP* of the candidate cell.

In the embodiments of this disclosure, as shown in FIG. 12, the apparatus further includes:
a third switch unit 1203 configured to switch an active downlink BWP from a first downlink BWP to a third downlink BWP, the third downlink BWP being a downlink BWP of the candidate cell with the same BWP identifier (*bwp-id*) as the third uplink BWP or the fourth uplink BWP.

In the embodiments of this disclosure, the first downlink BWP is an active downlink BWP before BWP switching, and the third downlink BWP is an active downlink BWP after BWP switching.

In the embodiments of this disclosure, the first downlink BWP is an active downlink BWP before random access is initiated/performed, and the third downlink BWP is an active downlink BWP after random access is initiated.

In the embodiments of this disclosure, the third switch unit 1203 is configured to, when the terminal equipment receives a random access response from the candidate cell, or when the terminal equipment receives a network instruction for receiving a random access response from the candidate cell, switch the active downlink BWP from the first downlink BWP to the third downlink BWP.

In the embodiments of this disclosure, as shown in FIG. 12, the apparatus further includes:
a fourth switch unit 1204 configured to switch the active uplink BWP from the second uplink BWP or the third uplink BWP or the fourth uplink BWP to the first uplink BWP.

In the embodiments of this disclosure, as shown in FIG. 12, the fourth switch unit 1204 is configured to, when a first timer expires and/or a second timer expires, switch the active uplink BWP to the first uplink BWP.

In the embodiments of this disclosure, as shown in FIG. 12, the apparatus further includes:
a first starting unit 1205 configured to start or restart the first timer when a random access procedure on a candidate cell is initiated; and/or,
a second starting unit 1206 configured to start or restart the second timer when the MAC entity switches the active uplink BWP from the first UL BWP to the second uplink BWP or the third uplink BWP or the fourth uplink BWP.

In the embodiments of this disclosure, as shown in FIG. 12, the apparatus further includes:
a first setting unit 1207 configured to, when a random access procedure on a candidate cell is initiated, set a random access type (*RA_TYPE*) to be of 4-step random access (4-stepRA); or
a second setting unit 1208 configured to, when a random access procedure on a candidate cell is initiated, set a random access type to be of 2-step random access (2-stepRA), an identifier of the terminal equipment in the candidate cell being included in a PUSCH of an MSGA.

In the embodiments of this disclosure, the first setting unit 1207 is configured to, when the random access procedure on the candidate cell is initiated by a PDCCH order and/or the random access procedure on the candidate cell is initiated to obtain timing advance (TA) of the candidate cell, set the random access type to be of 4-step random access.

In the embodiments of this disclosure, the identifier of the terminal equipment in the candidate cell is included in a candidate configuration.

In the embodiments of this disclosure, the second setting unit 1208 is configured to, for the second uplink BWP or the third uplink BWP or the fourth uplink BWP, when an RRC message and/or a PDCCH explicitly provide(s) contention-free random access resources of 4-step random access and 2-step random access within a selected random access resource group and reference signal received power (RSRP) of a downlink path-loss reference is greater than a preset threshold, set the random access type to be of 2-step random access.

In the embodiments of this disclosure, the second setting unit 1208 is configured to, for the second uplink BWP or the third uplink BWP or the fourth uplink BWP, when an RRC message and/or a PDCCH only explicitly provide(s) contention-free random access resources of 2-step random access within a selected random access resource group, set the random access type to be of 2-step random access.

In the embodiments of this disclosure, the identifier is a C-RNTI.

In the embodiments of this disclosure, as shown in FIG. 12, the apparatus further includes:
a first initiating unit 1209 configured to, when the terminal equipment evaluates the candidate cell and determines that the candidate cell satisfies a first condition and/or the terminal equipment evaluates the serving cell and determines that the serving cell satisfies a second condition or when the terminal equipment receives an MAC CE indicating a candidate cell, initiate a random access procedure on the candidate cell.

In the embodiments of this disclosure, the candidate cell is configured by RRC.

In the embodiments of this disclosure, the first condition includes at least one of the following conditions that:
a layer 1 measurement result of a downlink reference signal (DL RS) of the candidate cell is better than a layer 1 measurement result of a downlink reference signal of the serving cell;
the layer 1 measurement result of the downlink reference signal of the candidate cell is better than a configured first threshold;
under a current serving cell, the terminal equipment has not initiated a random access procedure on the candidate cell;
under the current serving cell, a preset time from initiating a random access procedure on the candidate cell by the terminal equipment for obtaining timing advance has passed; and
a timer corresponding to a timing advance group to which the candidate cell belongs expires.

In the embodiments of this disclosure, that the layer 1 measurement result of a downlink reference signal (DL RS) of the candidate cell is better than a layer 1 measurement result of a downlink reference signal of the serving cell includes that the layer 1 measurement result of the downlink reference signal (DL RS) of the candidate cell is better than the layer 1 measurement result of the downlink reference signal of the serving cell by a first offset and/or by lasting for a first time.

In the embodiments of this disclosure, that the layer 1 measurement result of a downlink reference signal of the candidate cell is better than a configured first threshold includes that: the layer 1 measurement result of the downlink reference signal of the candidate cell is better than the configured first threshold by a second offset and/or by lasting for a second time.

In the embodiments of this disclosure, the second condition includes at least one of the following conditions that:
the layer 1 measurement result of the downlink reference signal is worse than a configured second threshold; and
a radio link failure is detected.

In the embodiments of this disclosure, that the layer 1 measurement result of the downlink reference signal is worse than a configured second threshold includes that: the layer 1 measurement result of the downlink reference signal is worse than the configured second threshold by a third offset and/or by lasting for a third time.

In the embodiments of this disclosure, the downlink reference signal is an SSB and/or a CSI-RS, and/or, the downlink reference signal is configured with a corresponding random access resource, and/or, the layer 1 measurement result is RSRP or an SINR.

In the embodiments of this disclosure, the MAC CE is a of layer 1/layer 2-triggered mobility cell switch command.

In the embodiments of this disclosure, the MAC CE does not include timing advance of an indicated cell, and/or,
the MAC CE includes information on a random access resource and/or a downlink reference signal of an indicated cell, and/or,
the MAC CE includes information on a random access preamble (RA preamble) of an indicated cell.

In the embodiments of this disclosure, units 1202-1209 are optional.

In the embodiments of this disclosure, each of units 1202-1209 may be used individually, or may be used in various combinations as needed, and manners of combining these units are not limited in the embodiments of this disclosure.

In the embodiments of this disclosure, reference may be made to relevant steps in embodiment 1 for implementations of functions of the above units, which shall not be repeated herein any further.

It can be seen from the above embodiment that when a random access procedure on a candidate cell is initiated, for the candidate cell, an MAC entity of a terminal equipment switches an active uplink BWP from a first uplink BWP to a second uplink BWP or a third uplink BWP or a fourth uplink BWP, hence, a random access procedure may be performed on the candidate cell, thereby acquiring latest uplink timing before performing cell change, and reducing interruption time of LTM;
in addition, when a random access procedure on a candidate cell is initiated, the terminal equipment sets a random access type to be of 4-step random access (2-stepRA), or, when a random access procedure on a candidate cell is initiated, the terminal equipment sets a random access type to be of 2-step random access (2-stepRA), and an identifier of the terminal equipment in the candidate cell is included in a PUSCH of an MSGA; hence, the terminal equipment is able to select a random access type, thereby acquiring latest uplink timing before performing cell change, and reducing interruption time of LTM;
furthermore, when the terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, the terminal equipment initiates a random access procedure on the candidate cell; hence, in case of rapid changes in link quality of the candidate cell, the terminal is instructed to initiate a random access procedure on a candidate cell with good link quality, thereby acquiring a TA value on the candidate cell with good link quality.

### Embodiment 5

The embodiments of this disclosure provides a random access apparatus, provided in a terminal equipment. As a principle of the apparatus for solving problems is similar to that of the method in embodiment 2, reference may be made to the implementation of the method described in embodiment 2 for implementation of the apparatus, with identical contents being not going to be described herein any further.

FIG. 13 is a schematic diagram of the random access apparatus in embodiment 5 of this disclosure. As shown in FIG. 13, an apparatus 1300 includes:
a first setting unit 1301 configured to, when a random access procedure on a candidate cell is initiated, set a random access type to be of 4-step random access (4-stepRA); or
a second setting unit 1302 configured to, when a random access procedure on a candidate cell is initiated, set a random access type to be of 2-step random access (2-stepRA), an identifier of the terminal equipment in the candidate cell being included in a PUSCH of an MSGA.

In the embodiments of this disclosure, the first setting unit 1301 is configured to, when the random access procedure on the candidate cell is initiated by a PDCCH order and/or the random access procedure on the candidate cell is initiated to obtain timing advance (TA) of the candidate cell, set the random access type to be of 4-step random access.

In the embodiments of this disclosure, the identifier of the terminal equipment in the candidate cell is included in a candidate configuration.

In the embodiments of this disclosure, the second setting unit 1302 is configured to, for a BWP selected in the random access procedure, when an RRC message and/or a PDCCH explicitly provide(s) contention-free random access resources of 4-step random access and 2-step random access within a selected random access resource group and reference signal received power (RSRP) of a downlink path-loss reference is greater than a preset threshold, set the random access type to be of 2-step random access.

In the embodiments of this disclosure, the second setting unit 1302 is configured to, for a BWP selected in the random access procedure, when an RRC message and/or a PDCCH only explicitly provide(s) contention-free random access resources of 2-step random access within a selected random access resource group, set the random access type to be of 2-step random access.

In the embodiments of this disclosure, the identifier is a C-RNTI.

In the embodiments of this disclosure, reference may be made to relevant steps in embodiment 1 and embodiment 2 for implementations of functions of the above units, which shall not be repeated herein any further.

It can be seen from the above embodiment that when a random access procedure on a candidate cell is initiated, the terminal equipment sets a random access type to be of 4-step random access (2-stepRA), or, when a random access procedure on a candidate cell is initiated, the terminal equipment sets a random access type to be of 2-step random access (2-stepRA), and an identifier of the terminal equipment in the candidate cell is included in a PUSCH of an MSGA; hence, the terminal equipment is able to select a random access type, thereby acquiring latest uplink timing before performing cell change, and reducing interruption time of LTM.

### Embodiment 6

The embodiments of this disclosure provides a random access apparatus, provided in a terminal equipment. As a principle of the apparatus for solving problems is similar to that of the method in embodiment 3, reference may be made to the implementation of the method described in embodiment 3 for implementation of the apparatus, with identical contents being not going to be described herein any further.

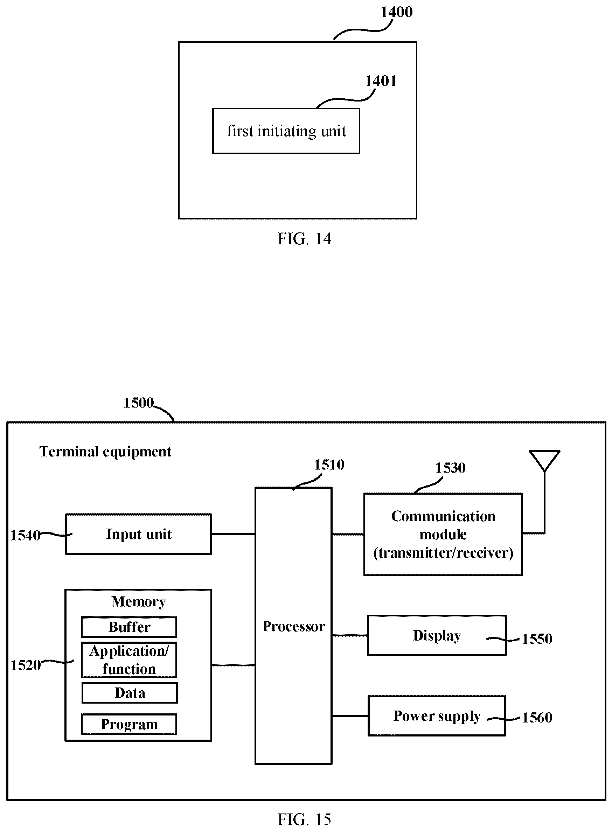

FIG. 14 is a schematic diagram of the random access apparatus in embodiment 6 of this disclosure. As shown in FIG. 14, an apparatus 1400 includes:
a first initiating unit 1401 configured to, when a terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, initiate a random access procedure on the candidate cell.

In the embodiments of this disclosure, the candidate cell is configured by RRC.

In the embodiments of this disclosure, the candidate cell is a target cell used for layer 1/layer 2 triggered mobility (LTM).

In the embodiments of this disclosure, the first condition includes at least one of the following conditions that:
a layer 1 measurement result of a downlink reference signal (DL RS) of the candidate cell is better than a layer 1 measurement result of a downlink reference signal of the serving cell;
the layer 1 measurement result of the downlink reference signal of the candidate cell is better than a configured first threshold;
under a current serving cell, the terminal equipment has not initiated a random access procedure on the candidate cell;
under the current serving cell, a preset time from initiating a random access procedure on the candidate cell by the terminal equipment for obtaining timing advance has passed; and
a timer corresponding to a timing advance group to which the candidate cell belongs expires.

In the embodiments of this disclosure, that the layer 1 measurement result of a downlink reference signal (DL RS) of the candidate cell is better than a layer 1 measurement result of a downlink reference signal of the serving cell includes that the layer 1 measurement result of the downlink reference signal (DL RS) of the candidate cell is better than the layer 1 measurement result of the downlink reference signal of the serving cell by a first offset and/or by lasting for a first time.

In the embodiments of this disclosure, the downlink reference signal of the serving cell is a current downlink reference signal of the serving cell.

In the embodiments of this disclosure, that the layer 1 measurement result of a downlink reference signal of the candidate cell is better than a configured first threshold includes that: the layer 1 measurement result of the downlink reference signal of the candidate cell is better than the configured first threshold by a second offset and/or by lasting for a second time.

In the embodiments of this disclosure, the second condition includes at least one of the following conditions that:
the layer 1 measurement result of the downlink reference signal is worse than a configured second threshold; and
a radio link failure is detected.

In the embodiments of this disclosure, that the layer 1 measurement result of the downlink reference signal is worse than a configured second threshold includes that:
the layer 1 measurement result of the downlink reference signal is worse than the configured second threshold by a third offset and/or by lasting for a third time.

In the embodiments of this disclosure, the downlink reference signal is an SSB and/or a CSI-RS, and/or
the downlink reference signal is configured with a corresponding random access resource, and/or
the layer 1 measurement result is RSRP or an SINR.

In the embodiments of this disclosure, the MAC CE is a of layer 1/layer 2-triggered mobility cell switch command.

In the embodiments of this disclosure, the MAC CE does not include timing advance of an indicated cell, and/or,
the MAC CE includes information on a random access resource and/or a downlink reference signal of an indicated cell, and/or,
the MAC CE includes information on a random access preamble (RA preamble) of an indicated cell.

It can be seen from the above embodiment that when the terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, the terminal equipment initiates a random access procedure on the candidate cell; hence, in case of rapid changes in link quality of the candidate cell, the terminal is instructed to initiate a random access procedure on a candidate cell with good link quality, thereby acquiring a TA value on the candidate cell with good link quality.

### Embodiment 7

The embodiments of this disclosure provides a terminal equipment, including the random access apparatus described in embodiment 4 or embodiment 5 or embodiment 6.

FIG. 15 is a block diagram of a systematic structure of the terminal equipment of embodiment 7 of this disclosure. As shown in FIG. 15, a terminal equipment 1500 may include a processor 1510 and a memory 1520, the memory 1520 being coupled to the processor 1510. It should be noted that this figure is illustrative only, and other types of structures may also be used, so as to supplement or replace this structure and achieve a telecommunications function or other functions.

In one implementation, the functions of the random access apparatus may be integrated into the processor 1510.

Corresponding to embodiment 4, the processor 1510 is configured to: when a random access procedure on a candidate cell is initiated, for the candidate cell, switch an active uplink BWP from a first uplink BWP to a second uplink BWP or a third uplink BWP or a fourth uplink BWP by an MAC entity of a terminal equipment, the second uplink BWP being an initial uplink BWP of the candidate cell or a serving cell associated with the candidate cell, the third uplink BWP being an uplink BWP of the candidate cell configured with PRACH occasions, and the fourth uplink BWP being an uplink BWP of the candidate cell indicated by a PDCCH.

Corresponding to embodiment 5, the processor 1510 is configured to: when a random access procedure on a candidate cell is initiated, set a random access type to be of 4-step random access (4-stepRA); or, when a random access procedure on a candidate cell is initiated, set a random access type to be of 2-step random access (2-stepRA), an identifier of the terminal equipment in the candidate cell being included in a PUSCH of an MSGA.

Corresponding to embodiment 6, the processor 1510 is configured to: when a terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, initiate a random access procedure on the candidate cell.

In another implementation, the random access apparatus and the processor 1510 may be configured separately; for example, the random access apparatus may be configured as a chip connected to the processor 1510, and the functions of the random access apparatus are performed under control of the processor 1510.

As shown in FIG. 15, the terminal equipment 1500 may further include a communication module 1530, an input unit 1540, a display 1550, and a power supply 1560. It should be noted that the terminal equipment 1500 does not necessarily include all the parts shown in FIG. 15. Furthermore, the terminal equipment 1500 may include parts not shown in FIG. 15, and the related art may be referred to.

As shown in FIG. 15, the processor 1510 is sometimes referred to as a controller or an operational control, which may include a microprocessor or other processor devices and/or logic devices. The processor 1510 receives input and controls operations of components of the terminal equipment 1500.

The memory 1520 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1510 may execute programs stored in the memory 1520, so as to realize information storage or processing, etc. Functions of other parts are similar to those of the related art, which shall not be described herein any further.

It can be seen from the above embodiment that when a random access procedure on a candidate cell is initiated, for the candidate cell, an MAC entity of a terminal equipment switches an active uplink BWP from a first uplink BWP to a second uplink BWP or a third uplink BWP or a fourth uplink BWP, hence, a random access procedure may be performed on the candidate cell, thereby acquiring latest uplink timing before performing cell change, and reducing interruption time of LTM;
in addition, when a random access procedure on a candidate cell is initiated, the terminal equipment sets a random access type to be of 4-step random access (2-stepRA), or, when a random access procedure on a candidate cell is initiated, the terminal equipment sets a random access type to be of 2-step random access (2-stepRA), and an identifier of the terminal equipment in the candidate cell is included in a PUSCH of an MSGA; hence, the terminal equipment is able to select a random access type, thereby acquiring latest uplink timing before performing cell change, and reducing interruption time of LTM;
furthermore, when the terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, the terminal equipment initiates a random access procedure on the candidate cell; hence, in case of rapid changes in link quality of the candidate cell, the terminal is instructed to initiate a random access procedure on a candidate cell with good link quality, thereby acquiring a TA value on the candidate cell with good link quality.

### Embodiment 8

The embodiments of this disclosure provides a random access method, applicable to a network device, such as the network device 101 in FIG. 3. This method corresponds to the method described in embodiment 1 performed at a terminal equipment side, and reference may be made to the implementation of the method described in embodiment 1, with identical or related parts being not going to be described herein any further.

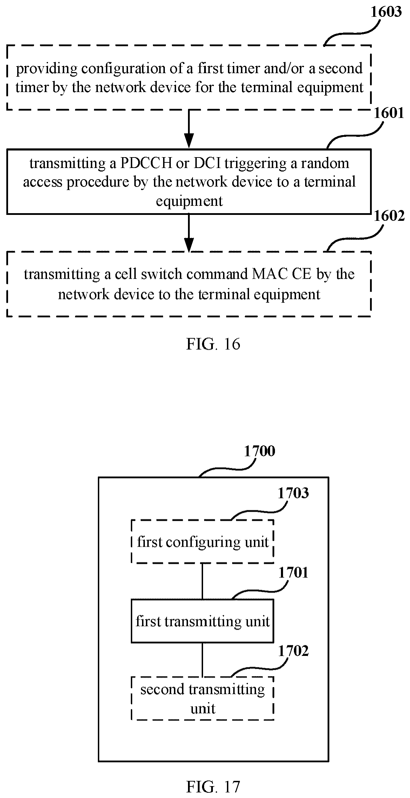

FIG. 16 is a schematic diagram of the random access method of embodiment 8 of this disclosure. As shown in FIG. 16, the method includes:
step 1601: transmitting a PDCCH or DCI triggering a random access procedure by the network device to a terminal equipment,
the PDCCH or the DCI indicating BWP information.

In the embodiments of this disclosure, as shown in FIG. 16, the method further includes:
step 1602: transmitting a cell switch command MAC CE by the network device to the terminal equipment.

In the embodiments of this disclosure, the cell switch command MAC CE indicates random access information.

In the embodiments of this disclosure, the cell switch command MAC CE is a L1/L2-triggered mobility cell switch command.

In the embodiments of this disclosure, as shown in FIG. 16, the method further includes:
step 1603: providing configuration of a first timer and/or a second timer by the network device for the terminal equipment.

Reference may be made to embodiment 1 for specific contents of the first timer and the second timer, which shall not be repeated herein any further.

In the embodiments of this disclosure, step 1602 and step 1603 are optional, which are denoted by frames in dotted lines in FIG. 16.

In the embodiments of this disclosure, step 1602 and step 1603 may be performed separately, that is, step 1601 is not performed, and step 1602 and/or step 1603 is/are performed.

### Embodiment 9

The embodiments of this disclosure provides a random access apparatus, configured in a network device. The apparatus corresponds to the method described in embodiment 8, and reference may be made to the implementation of the method described in embodiment 8 for implementation of the apparatus, with identical or related parts being not going to be described herein any further.

FIG. 17 is a schematic diagram of the random access apparatus of embodiment 9 of this disclosure. As shown in FIG. 17, an apparatus 1700 includes:
a first transmitting unit 1701 configured to transmit a PDCCH or DCI triggering a random access procedure by the network device to a terminal equipment,
the PDCCH or the DCI indicating BWP information.

In the embodiments of this disclosure, as shown in FIG. 17, the apparatus 1700 further includes:
a second transmitting unit 1702 configured to transmit a cell switch command MAC CE by the network device to the terminal equipment.

In the embodiments of this disclosure, the cell switch command MAC CE indicates random access information.

In the embodiments of this disclosure, the cell switch command MAC CE is a L1/L2-triggered mobility cell switch command.

In the embodiments of this disclosure, as shown in FIG. 17, the apparatus 1700 further includes:
a first configuring unit 1703 configured to provide configuration of a first timer and/or a second timer for the terminal equipment.

In the embodiments of this disclosure, the second transmitting unit 1702 and the first configuring unit 1703 are optional, which are denoted by frames in dotted lines in FIG. 17.

In the embodiments of this disclosure, the second transmitting unit 1702 and the first configuring unit 1703 may be used separately, that is, the first transmitting unit 1701 is not used, and the second transmitting unit 1702 and/or the first configuring unit 1703 is/are used.

### Embodiment 10

The embodiments of this disclosure provides a network device, including the random access apparatus described in embodiment 9.

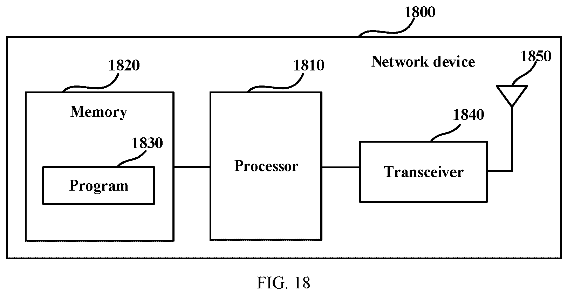

FIG. 18 is a schematic diagram of a systematic structure of the network device of embodiment 10 of this disclosure. As shown in FIG. 18, a network device 1800 may include a processor 1810 and a memory 1820, the memory 1820 being coupled to the processor 1810. Wherein, the memory 1820 may store various data, and furthermore, it may store a program 1830 for data processing, and execute the program 1830 under control of the processor 1810, so as to receive various information transmitted by a terminal equipment, and transmit various information to the terminal equipment.

In one implementation, the functions of the random access apparatus may be integrated into the processor 1810.

The processor 1810 may be configured to: transmit a PDCCH or DCI triggering a random access procedure to a terminal equipment, the PDCCH or the DCI indicating BWP information.

In another implementation, the random access apparatus and the processor 1810 may be configured separately; for example, the random access apparatus may be configured as a chip connected to the processor 1810, and the functions of the random access apparatus are performed under control of the processor 1810.

Furthermore, as shown in FIG. 18, the network device 1800 may include a transceiver 1840, and an antenna 1850, etc. Wherein, functions of the above components are similar to those in the related art, and shall not be described herein any further. It should be noted that the network device 1800 does not necessarily include all the parts shown in FIG. 18. Furthermore, the network device 1800 may include parts not shown in FIG. 18, and the related art may be referred to.

### Embodiment 11

The embodiments of this disclosure provides a communication system, including the terminal equipment described in embodiment 7 and/or the network device described in embodiment 10, and reference may be made to embodiment 7 and embodiment 10 for specific contents.

For example, reference may be made to FIG. 3 for a structure of the communication system. As shown in FIG. 3, the communication system 100 includes the network device 101 and the terminal equipment 102. The terminal equipment 102 may be identical to the terminal equipment described in embodiment 7, and/or, the network device 101 may be identical to the network device described in embodiment 10, with repeated parts being not going to be described herein any further.

The above apparatuses and methods of this disclosure may be implemented by hardware, or by hardware in combination with software. This disclosure relates to such a computer-readable program that when the program is performed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules performed by a processor, or a combination thereof. For example, one or more functional block diagrams and/or one or more combinations of the functional block diagrams shown in FIG. 12 may either correspond to software modules of procedures of a computer program, or correspond to hardware modules. Such software modules may respectively correspond to the steps shown in FIG. 9. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 12 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 12 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to the implementations including the above embodiments, following supplements are further disclosed.

### First group of supplements

### Supplements (I)

1. A random access apparatus, including:
   a first switch unit configured to, when a random access procedure on a candidate cell is initiated, for the candidate cell, switch an active uplink BWP from a first uplink BWP to a second uplink BWP or a third uplink BWP or a fourth uplink BWP by an MAC entity of a terminal equipment,
   the second uplink BWP being an initial uplink BWP of the candidate cell or a serving cell associated with the candidate cell, the third uplink BWP being an uplink BWP of the candidate cell configured with PRACH occasions, and the fourth uplink BWP being an uplink BWP of the candidate cell indicated by a PDCCH.
2. The apparatus according to supplement 1, wherein the switching an active uplink BWP from a first uplink BWP to a second uplink BWP by an MAC entity of a terminal equipment includes:
   when the initial uplink BWP of the candidate cell is included in the initial uplink BWP of the serving cell associated with the candidate cell, switching the active uplink BWP from the first uplink BWP to the initial uplink BWP of the serving cell associated with the candidate cell by the MAC entity.
3. The apparatus according to supplement 2, wherein,
   the initial uplink BWP of the serving cell associated with the candidate cell is a BWP indicated by *initialUplinkBWP* or *initialUplinkBWP-RedCap.*
4. The apparatus according to supplement 3, wherein,
   when the terminal equipment is an RedCap UE and the serving cell associated with the candidate cell is configured with the *initialUplinkBWP-RedCap,* the initial uplink BWP of the serving cell associated with the candidate cell is the BWP indicated by the *initialUplinkBWP-RedCap* of the serving cell; and/or,
   when the terminal equipment is not an RedCap UE or the serving cell associated with the candidate cell is not configured with the *initialUplinkBWP-RedCap,* the initial uplink BWP of the serving cell associated with the candidate cell is the BWP indicated by the *initialUplinkBWP* of the serving cell.
5. The apparatus according to supplement 1, wherein the switching an active uplink BWP from a first uplink BWP to a second uplink BWP by an MAC entity of a terminal equipment includes:
   when the initial uplink BWP of the candidate cell is not within the initial uplink BWP of the serving cell associated with the candidate cell, switching the active uplink BWP from the first uplink BWP to the initial uplink BWP of the candidate cell by the MAC entity.
6. The apparatus according to supplement 5, wherein,
   the initial uplink BWP of the candidate cell is a BWP indicated by *initialUplinkBWP* or *initialUplinkBWP-RedCap.*
7. The apparatus according to supplement 6, wherein,
   when the terminal equipment is an RedCap UE and the candidate cell is configured with the *initialUplinkBWP-RedCap,* the initial uplink BWP of the candidate cell is the BWP indicated by the *initialUplinkBWP-RedCap* of the candidate cell; and/or,
   when the terminal equipment is not an RedCap UE or the candidate cell is not configured with the *initialUplinkBWP-RedCap,* the initial uplink BWP of the candidate cell is the BWP indicated by the *initialUplinkBWP* of the candidate cell.
8. The apparatus according to supplement 1, wherein the switching an active uplink BWP from a first uplink BWP to a third uplink BWP by an MAC entity of a terminal equipment includes:
   in a case where multiple uplink BWPs of the candidate cell are configured with PRACH occasions, selecting an uplink BWP in the multiple uplink BWPs and switching the active uplink BWP from the first uplink BWP to the selected uplink BWP by the terminal equipment.
9. The apparatus according to supplement 8, wherein,
   in the case where multiple uplink BWPs of the candidate cell are configured with PRACH occasions, the terminal equipment selects an uplink BWP in the multiple uplink BWPs based on implementation and switches the active uplink BWP from the first uplink BWP to the selected uplink BWP.
10. The apparatus according to supplement 1, wherein the switching an active uplink BWP from a first uplink BWP to a fourth uplink BWP by an MAC entity of a terminal equipment includes:
   indicating BWP information by a PDCCH or DCI received by the terminal equipment that triggers a random access procedure.
11. The apparatus according to any one of supplements 2-8, wherein the apparatus further includes:
   a second switch unit configured to, when a serving cell to which the first uplink BWP belongs is a special cell, switch an active downlink BWP from a first downlink BWP to a second downlink BWP by the MAC entity.
12. The apparatus according to supplement 11, wherein,
   the second switch unit is configured to, when the initial uplink BWP of the candidate cell is included in the initial uplink BWP of the serving cell associated with the candidate cell and/or the initial downlink BWP of the candidate cell is included in the initial downlink BWP of the serving cell associated with the candidate cell and the serving cell to which the first uplink BWP belongs is a special cell, switch the active downlink BWP from the first downlink BWP to the second downlink BWP,
   the second downlink BWP being the initial downlink BWP of the serving cell associated with the candidate cell.
13. The apparatus according to supplement 12, wherein,
   the initial downlink BWP of the candidate cell is the BWP indicated by *initialDownlinkBWP* or *initialDownlinkBWP-RedCap.*
14. The apparatus according to supplement 13, wherein,
   when the terminal equipment is an RedCap UE and the serving cell associated with the candidate cell is configured with the *initialDownlinkBWP-RedCap,* the initial uplink BWP of the serving cell associated with the candidate cell is the BWP indicated by the *initialDownlinkBWP-RedCap* of the serving cell; and/or,
   when the terminal equipment is not an RedCap UE or the serving cell associated with the candidate cell is not configured with the *initialDownlinkBWP-RedCap,* the initial uplink BWP of the serving cell associated with the candidate cell is the BWP indicated by the *initialDownlinkBWP* of the serving cell.
15. The apparatus according to supplement 11, wherein,
   the second switch unit is configured to, when the initial uplink BWP of the candidate cell is not within the initial uplink BWP of the serving cell associated with the candidate cell and/or the initial downlink BWP of the candidate cell is not within the initial downlink BWP of the serving cell associated with the candidate cell and the serving cell to which the first uplink BWP belongs is a special cell, switch the active downlink BWP from the first downlink BWP to the second downlink BWP,
   the second downlink BWP being the initial downlink BWP of the candidate cell.
16. The apparatus according to supplement 15, wherein,
   the initial downlink BWP of the candidate cell is the BWP indicated by *initialDownlinkBWP* or *initialDownlinkBWP-RedCap.*
17. The apparatus according to supplement 16, wherein,
   when the terminal equipment is an RedCap UE and the candidate cell is configured with the *initialDownlinkBWP-RedCap,* the initial downlink BWP of the candidate cell is the BWP indicated by the *initialDownlinkBWP-RedCap* of the candidate cell; and/or,
   when the terminal equipment is not an RedCap UE or the candidate cell is not configured with the *initialDownlinkBWP-RedCap,* the initial downlink BWP of the candidate cell is the BWP indicated by the *initialDownlinkBWP* of the candidate cell.
18. The apparatus according to any one of supplements 1-17, wherein the apparatus further includes:
   a third switch unit configured to switch an active downlink BWP from a first downlink BWP to a third downlink BWP by the MAC entity,
   the third downlink BWP being a downlink BWP of the candidate cell with the same BWP identifier (*bwp-id*) as the third uplink BWP or the fourth uplink BWP.
19. The apparatus according to supplement 18, wherein,
   the third switch unit is configured to, when the terminal equipment receives a random access response from the candidate cell, or when the terminal equipment receives a network instruction for receiving a random access response from the candidate cell, switch the active downlink BWP from the first downlink BWP to the third downlink BWP.
20. The apparatus according to any one of supplements 1-19, wherein the apparatus further includes:
   a fourth switch unit configured to switch the active uplink BWP from the second uplink BWP or the third uplink BWP or the fourth uplink BWP to the first uplink BWP.
21. The apparatus according to supplement 20, wherein,
   the fourth switch unit is configured to, when a first timer expires and/or a second timer expires, switch the active uplink BWP to the first uplink BWP.
22. The apparatus according to any one of supplements 1-21, wherein the apparatus further includes:
   a first starting unit configured to start or restart the first timer when a random access procedure on a candidate cell is initiated; and/or,
   a second starting unit configured to start or restart the second timer when the MAC entity switches the active uplink BWP from the first UL BWP to the second uplink BWP or the third uplink BWP or the fourth uplink BWP.
23. The apparatus according to any one of supplements 1-22, wherein the apparatus further includes:
   a first setting unit configured to, when a random access procedure on a candidate cell is initiated, set a random access type to be of 4-step random access (4-stepRA); or
   a second setting unit configured to, when a random access procedure on a candidate cell is initiated, set a random access type to be of 2-step random access (2-stepRA), an identifier of the terminal equipment in the candidate cell being included in a PUSCH of an MSGA.
24. The apparatus according to supplement 23, wherein,
   the first setting unit is configured to, when the random access procedure on the candidate cell is initiated by a PDCCH order and/or the random access procedure on the candidate cell is initiated to obtain timing advance (TA) of the candidate cell, set the random access type to be of 4-step random access.
25. The apparatus according to supplement 23, wherein,
   the identifier of the terminal equipment in the candidate cell is included in a candidate configuration.
26. The apparatus according to supplement 23 or 25, wherein,
   the second setting unit is configured to, for the second uplink BWP or the third uplink BWP or the fourth uplink BWP, when an RRC message and/or a PDCCH explicitly provide(s) contention-free random access resources of 4-step random access and 2-step random access within a selected random access resource group and reference signal received power (RSRP) of a downlink path-loss reference is greater than a preset threshold, set the random access type to be of 2-step random access.
27. The apparatus according to supplement 23 or 25, wherein,
   the second setting unit is configured to, for the second uplink BWP or the third uplink BWP or the fourth uplink BWP, when an RRC message and/or a PDCCH only explicitly provide(s) contention-free random access resources of 2-step random access within a selected random access resource group, set the random access type to be of 2-step random access.
28. The apparatus according to any one of supplements 23-27, wherein,
   the identifier is a C-RNTI.
29. The apparatus according to any one of supplements 1-28, wherein the apparatus further includes:
   a first initiating unit configured to, when the terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, initiate a random access procedure on the candidate cell.
30. The apparatus according to supplement 29, wherein,
   the candidate cell is configured by RRC.
31. The apparatus according to supplement 30, wherein,
   the candidate cell is a target cell used for layer 1/layer 2 triggered mobility (LTM).
32. The apparatus according to any one of supplements 29-31, wherein the first condition includes at least one of the following conditions that:
   a layer 1 measurement result of a downlink reference signal (DL RS) of the candidate cell is better than a layer 1 measurement result of a downlink reference signal of the serving cell;
   the layer 1 measurement result of the downlink reference signal of the candidate cell is better than a configured first threshold;
   under a current serving cell, the terminal equipment has not initiated a random access procedure on the candidate cell;
   under the current serving cell, a preset time from initiating a random access procedure on the candidate cell by the terminal equipment for obtaining timing advance has passed; and
   a timer corresponding to a timing advance group to which the candidate cell belongs expires.
33. The apparatus according to supplement 32, wherein,
   that the layer 1 measurement result of a downlink reference signal (DL RS) of the candidate cell is better than a layer 1 measurement result of a downlink reference signal of the serving cell includes that the layer 1 measurement result of the downlink reference signal (DL RS) of the candidate cell is better than the layer 1 measurement result of the downlink reference signal of the serving cell by a first offset and/or by lasting for a first time.
34. The apparatus according to supplement 32 or 33, wherein,
   the downlink reference signal of the serving cell is a current downlink reference signal of the serving cell.
35. The apparatus according to supplement 32, wherein,
   that the layer 1 measurement result of a downlink reference signal of the candidate cell is better than a configured first threshold includes that: the layer 1 measurement result of the downlink reference signal of the candidate cell is better than the configured first threshold by a second offset and/or by lasting for a second time.
36. The apparatus according to any one of supplements 29-35, wherein the second condition includes at least one of the following conditions that:
   the layer 1 measurement result of the downlink reference signal is worse than a configured second threshold; and
   a radio link failure is detected.
37. The apparatus according to supplement 36, wherein that the layer 1 measurement result of the downlink reference signal is worse than a configured second threshold includes that:
   the layer 1 measurement result of the downlink reference signal is worse than the configured second threshold by a third offset and/or by lasting for a third time.
38. The apparatus according to any one of supplements 32-37, wherein,
   the downlink reference signal is an SSB and/or a CSI-RS, and/or,
   the downlink reference signal is configured with a corresponding random access resource, and/or,
   the layer 1 measurement result is RSRP or an SINR.
39. The apparatus according to supplement 29, wherein,
   the MAC CE is a layer 1/layer 2-triggered mobility cell switch command.
40. The apparatus according to supplement 39, wherein,
   the MAC CE does not include timing advance of an indicated cell, and/or,
   the MAC CE includes information on a random access resource and/or a downlink reference signal of an indicated cell, and/or,
   the MAC CE includes information on a random access preamble (RA preamble) of an indicated cell.
41. A random access apparatus, including:
   a first transmitting unit configured to transmit a PDCCH or DCI triggering a random access procedure by the network device to a terminal equipment,
   the PDCCH or the DCI indicating BWP information.
42. The apparatus according to supplement 41, wherein the apparatus further includes:
   a second transmitting unit configured to transmit a cell switch command MAC CE by the network device to the terminal equipment.
43. The apparatus according to supplement 42, wherein,
   the cell switch command MAC CE indicates random access information.
44. The apparatus according to supplement 42 or 43, wherein,
   the cell switch command MAC CE is a L1/L2-triggered mobility cell switch command.
45. The apparatus according to any one of supplements 41-44, wherein the apparatus further includes:
   a first configuring unit configured to provide configuration of a first timer and/or a second timer for the terminal equipment.
46. A terminal equipment, including the apparatus as described in any one of supplements 1-40.
47. A network device, including the apparatus as described in any one of supplements 41-45.
48. A communication system, including the terminal equipment as described in supplement 46 and/or the network device as described in supplement 47.

### Supplements (II)

1. A random access method, including:
   when a random access procedure on a candidate cell is initiated, for the candidate cell,
   switching an active uplink BWP from a first uplink BWP to a second uplink BWP or a third uplink BWP or a fourth uplink BWP by an MAC entity of a terminal equipment,
   the second uplink BWP being an initial uplink BWP of the candidate cell or a serving cell associated with the candidate cell, the third uplink BWP being an uplink BWP of the candidate cell configured with PRACH occasions, and the fourth uplink BWP being an uplink BWP of the candidate cell indicated by a PDCCH.
2. The method according to supplement 1, wherein the switching an active uplink BWP from a first uplink BWP to a second uplink BWP by an MAC entity of a terminal equipment includes:
   when the initial uplink BWP of the candidate cell is included in the initial uplink BWP of the serving cell associated with the candidate cell, switching the active uplink BWP from the first uplink BWP to the initial uplink BWP of the serving cell associated with the candidate cell by the MAC entity.
3. The method according to supplement 2, wherein,
   the initial uplink BWP of the serving cell associated with the candidate cell is a BWP indicated by *initialUplinkBWP* or *initialUplinkBWP-RedCap.*
4. The method according to supplement 3, wherein,
   when the terminal equipment is an RedCap UE and the serving cell associated with the candidate cell is configured with the *initialUplinkBWP-RedCap,* the initial uplink BWP of the serving cell associated with the candidate cell is the BWP indicated by the *initialUplinkBWP-RedCap* of the serving cell; and/or,
   when the terminal equipment is not an RedCap UE or the serving cell associated with the candidate cell is not configured with the *initialUplinkBWP-RedCap,* the initial uplink BWP of the serving cell associated with the candidate cell is the BWP indicated by the *initialUplinkBWP* of the serving cell.
5. The method according to supplement 1, wherein the switching an active uplink BWP from a first uplink BWP to a second uplink BWP by an MAC entity of a terminal equipment includes:
   when the initial uplink BWP of the candidate cell is not within the initial uplink BWP of the serving cell associated with the candidate cell, switching the active uplink BWP from the first uplink BWP to the initial uplink BWP of the candidate cell by the MAC entity.
6. The method according to supplement 5, wherein,
   the initial uplink BWP of the candidate cell is a BWP indicated by *initialUplinkBWP* or *initialUplinkBWP-RedCap.*
7. The method according to supplement 6, wherein,
   when the terminal equipment is an RedCap UE and the candidate cell is configured with the *initialUplinkBWP-RedCap,* the initial uplink BWP of the candidate cell is the BWP indicated by the *initialUplinkBWP-RedCap* of the candidate cell; and/or,
   when the terminal equipment is not an RedCap UE or the candidate cell is not configured with the *initialUplinkBWP-RedCap,* the initial uplink BWP of the candidate cell is the BWP indicated by the *initialUplinkBWP* of the candidate cell.
8. The method according to supplement 1, wherein the switching an active uplink BWP from a first uplink BWP to a third uplink BWP by an MAC entity of a terminal equipment includes:
   in a case where multiple uplink BWPs of the candidate cell are configured with PRACH occasions, selecting an uplink BWP in the multiple uplink BWPs and switching the active uplink BWP from the first uplink BWP to the selected uplink BWP by the terminal equipment.
9. The method according to supplement 8, wherein,
   in the case where multiple uplink BWPs of the candidate cell are configured with PRACH occasions, the terminal equipment selects an uplink BWP in the multiple uplink BWPs based on implementation and switches the active uplink BWP from the first uplink BWP to the selected uplink BWP.
10. The method according to supplement 1, wherein the switching an active uplink BWP from a first uplink BWP to a fourth uplink BWP by an MAC entity of a terminal equipment includes:
   indicating BWP information by a PDCCH or DCI received by the terminal equipment that triggers a random access procedure.
11. The method according to any one of supplements 2-8, wherein the method further includes:
   when a serving cell to which the first uplink BWP belongs is a special cell, switching an active downlink BWP from a first downlink BWP to a second downlink BWP by the MAC entity.
12. The method according to supplement 11, wherein the when a serving cell to which the first uplink BWP belongs is a special cell, switching an active downlink BWP from a first downlink BWP to a second downlink BWP by the MAC entity includes:
   when the initial uplink BWP of the candidate cell is included in the initial uplink BWP of the serving cell associated with the candidate cell and/or the initial downlink BWP of the candidate cell is included in the initial downlink BWP of the serving cell associated with the candidate cell and the serving cell to which the first uplink BWP belongs is a special cell, switching the active downlink BWP from the first downlink BWP to the second downlink BWP,
   the second downlink BWP being the initial downlink BWP of the serving cell associated with the candidate cell.
13. The method according to supplement 12, wherein,
   the initial downlink BWP of the candidate cell is the BWP indicated by *initialDownlinkBWP* or *initialDownlinkBWP-RedCap.*
14. The method according to supplement 13, wherein,
   when the terminal equipment is an RedCap UE and the serving cell associated with the candidate cell is configured with the *initialDownlinkBWP-RedCap,* the initial uplink BWP of the serving cell associated with the candidate cell is the BWP indicated by the *initialDownlinkBWP-RedCap* of the serving cell; and/or,
   when the terminal equipment is not an RedCap UE or the serving cell associated with the candidate cell is not configured with the *iinitialDownlinkBWP-RedCap,* the initial uplink BWP of the serving cell associated with the candidate cell is the BWP indicated by the *initialDownlinkBWP* of the serving cell.
15. The method according to supplement 11, wherein the when a serving cell to which the first uplink BWP belongs is a special cell, switching an active downlink BWP from a first downlink BWP to a second downlink BWP by the MAC entity includes:
   when the initial uplink BWP of the candidate cell is not within the initial uplink BWP of the serving cell associated with the candidate cell and/or the initial downlink BWP of the candidate cell is not within the initial downlink BWP of the serving cell associated with the candidate cell and the serving cell to which the first uplink BWP belongs is a special cell, switching the active downlink BWP from the first downlink BWP to the second downlink BWP,
   the second downlink BWP being the initial downlink BWP of the candidate cell.
16. The method according to supplement 15, wherein,
   the initial downlink BWP of the candidate cell is the BWP indicated by *initialDownlinkBWP* or *initialDownlinkBWP-RedCap.*
17. The method according to supplement 16, wherein,
   when the terminal equipment is an RedCap UE and the candidate cell is configured with the *initialDownlinkBWP-RedCap,* the initial downlink BWP of the candidate cell is the BWP indicated by the *initialDownlinkBWP-RedCap* of the candidate cell; and/or,
   when the terminal equipment is not an RedCap UE or the candidate cell is not configured with the *initialDownlinkBWP-RedCap,* the initial downlink BWP of the candidate cell is the BWP indicated by the *initialDownlinkBWP* of the candidate cell.
18. The method according to any one of supplements 1-17, wherein the method further includes:
   switching an active downlink BWP from a first downlink BWP to a third downlink BWP by the MAC entity,
   the third downlink BWP being a downlink BWP of the candidate cell with the same BWP identifier (*bwp*-*id*) as the third uplink BWP or the fourth uplink BWP.
19. The method according to supplement 18, wherein,
   when the terminal equipment receives a random access response from the candidate cell, or when the terminal equipment receives a network instruction for receiving a random access response from the candidate cell, the MAC entity switches the active downlink BWP from the first downlink BWP to the third downlink BWP.
20. The method according to any one of supplements 1-19, wherein the method further includes:
   switching the active uplink BWP from the second uplink BWP or the third uplink BWP or the fourth uplink BWP to the first uplink BWP by the MAC entity.
21. The method according to supplement 20, wherein,
   when a first timer expires and/or a second timer expires, the MAC entity switches the active uplink BWP to the first uplink BWP.
22. The method according to any one of supplements 1-21, wherein the method further includes:
   starting or restarting the first timer when a random access procedure on a candidate cell is initiated; and/or,
   starting or restarting the second timer when the MAC entity switches the active uplink BWP from the first UL BWP to the second uplink BWP or the third uplink BWP or the fourth uplink BWP.
23. The method according to any one of supplements 1-22, wherein the method further includes:
   when a random access procedure on a candidate cell is initiated, setting a random access type to be of 4-step random access (4-stepRA) by the terminal equipment; or
   when a random access procedure on a candidate cell is initiated, setting a random access type to be of 2-step random access (2-stepRA) by the terminal equipment, an identifier of the terminal equipment in the candidate cell being included in a PUSCH of an MSGA.
24. The method according to supplement 23, wherein the when a random access procedure on a candidate cell is initiated, setting a random access type to be of 4-step random access (4-stepRA) by the terminal equipment, includes:
   when the random access procedure on the candidate cell is initiated by a PDCCH order and/or the random access procedure on the candidate cell is initiated to obtain timing advance (TA) of the candidate cell, setting the random access type to be of 4-step random access by the terminal equipment.
25. The method according to supplement 23, wherein,
   the identifier of the terminal equipment in the candidate cell is included in a candidate configuration.
26. The method according to supplement 23 or 25, wherein the setting a random access type to be of 2-step random access (2-stepRA) by the terminal equipment includes:
   for the second uplink BWP or the third uplink BWP or the fourth uplink BWP, when an RRC message and/or a PDCCH explicitly provide(s) contention-free random access resources of 4-step random access and 2-step random access within a selected random access resource group and reference signal received power (RSRP) of a downlink path-loss reference is greater than a preset threshold, setting the random access type to be of 2-step random access by the terminal equipment.
27. The method according to supplement 23 or 25, wherein the setting a random access type to be of 2-step random access (2-stepRA) by the terminal equipment includes:
   for the second uplink BWP or the third uplink BWP or the fourth uplink BWP, when an RRC message and/or a PDCCH only explicitly provide(s) contention-free random access resources of 2-step random access within a selected random access resource group, setting the random access type to be of 2-step random access by the terminal equipment.
28. The method according to any one of supplements 23-27, wherein,
   the identifier is a C-RNTI.
29. The method according to any one of supplements 1-28, wherein the method further includes:
   when the terminal equipment evaluates a candidate cell and determines that the candidate cell satisfies a first condition and/or the terminal equipment evaluates the serving cell and determines that a serving cell satisfies a second condition, or,
   when the terminal equipment receives an MAC CE indicating a candidate cell,
   initiating a random access procedure on the candidate cell by the terminal equipment.
30. The method according to supplement 29, wherein,
   the candidate cell is configured by RRC.
31. The method according to supplement 30, wherein,
   the candidate cell is a target cell used for layer 1/layer 2 triggered mobility (LTM).
32. The method according to any one of supplements 29-31, wherein the first condition includes at least one of the following conditions that:
   a layer 1 measurement result of a downlink reference signal (DL RS) of the candidate cell is better than a layer 1 measurement result of a downlink reference signal of the serving cell;
   the layer 1 measurement result of the downlink reference signal of the candidate cell is better than a configured first threshold;
   under a current serving cell, the terminal equipment has not initiated a random access procedure on the candidate cell;
   under the current serving cell, a preset time from initiating a random access procedure on the candidate cell by the terminal equipment for obtaining timing advance has passed; and
   a timer corresponding to a timing advance group to which the candidate cell belongs expires.
33. The method according to supplement 32, wherein,
   that the layer 1 measurement result of a downlink reference signal (DL RS) of the candidate cell is better than a layer 1 measurement result of a downlink reference signal of the serving cell includes that the layer 1 measurement result of the downlink reference signal (DL RS) of the candidate cell is better than the layer 1 measurement result of the downlink reference signal of the serving cell by a first offset and/or by lasting for a first time.
34. The method according to supplement 32 or 33, wherein,
   the downlink reference signal of the serving cell is a current downlink reference signal of the serving cell.
35. The method according to supplement 32, wherein,
   that the layer 1 measurement result of a downlink reference signal of the candidate cell is better than a configured first threshold includes that: the layer 1 measurement result of the downlink reference signal of the candidate cell is better than the configured first threshold by a second offset and/or by lasting for a second time.
36. The method according to any one of supplements 29-35, wherein the second condition includes at least one of the following conditions that:
   the layer 1 measurement result of the downlink reference signal is worse than a configured second threshold; and
   a radio link failure is detected.
37. The method according to supplement 36, wherein that the layer 1 measurement result of the downlink reference signal is worse than a configured second threshold includes that:
   the layer 1 measurement result of the downlink reference signal is worse than the configured second threshold by a third offset and/or by lasting for a third time.
38. The method according to any one of supplements 32-37, wherein,
   the downlink reference signal is an SSB and/or a CSI-RS, and/or,
   the downlink reference signal is configured with a corresponding random access resource, and/or,
   the layer 1 measurement result is RSRP or an SINR.
39. The method according to supplement 29, wherein,
   the MAC CE is a layer 1/layer 2-triggered mobility cell switch command.
40. The method according to supplement 39, wherein,
   the MAC CE does not include timing advance of an indicated cell, and/or,
   the MAC CE includes information on a random access resource and/or a downlink reference signal of an indicated cell, and/or,
   the MAC CE includes information on a random access preamble (RA preamble) of an indicated cell.
41. A random access method, including:
   transmitting a PDCCH or DCI triggering a random access procedure by a network device to a terminal equipment,
   the PDCCH or the DCI indicating BWP information.
42. The method according to supplement 41, wherein the method further includes:
   transmitting a cell switch command MAC CE by the network device to the terminal equipment.
43. The method according to supplement 42, wherein,
   the cell switch command MAC CE indicates random access information.
44. The method according to supplement 42 or 43, wherein,
   the cell switch command MAC CE is a L1/L2-triggered mobility cell switch command.
45. The method according to any one of supplements 41-44, wherein the method further includes:
   providing configuration of a first timer and/or a second timer by the network device for the terminal equipment.

### Second group of supplements

### Supplements (I)

1. A random access apparatus, including:
   a first setting unit configured to, when a random access procedure on a candidate cell is initiated, set a random access type to be of 4-step random access (4-stepRA); or
   a second setting unit configured to, when a random access procedure on a candidate cell is initiated, set a random access type to be of 2-step random access (2-stepRA), an identifier of the terminal equipment in the candidate cell being included in a PUSCH of an MSGA.
2. The apparatus according to supplement 1, wherein,
   the first setting unit is configured to, when the random access procedure on the candidate cell is initiated by a PDCCH order and/or the random access procedure on the candidate cell is initiated to obtain timing advance (TA) of the candidate cell, set the random access type to be of 4-step random access.
3. The apparatus according to supplement 1, wherein,
   the identifier of the terminal equipment in the candidate cell is included in a candidate configuration.
4. The apparatus according to supplement 1 or 3, wherein,
   the second setting unit is configured to, for a BWP selected in the random access procedure, when an RRC message and/or a PDCCH explicitly provide(s) contention-free random access resources of 4-step random access and 2-step random access within a selected random access resource group and reference signal received power (RSRP) of a downlink path-loss reference is greater than a preset threshold, set the random access type to be of 2-step random access.
5. The apparatus according to supplement 1 or 3, wherein,
   the second setting unit is configured to, for a BWP selected in the random access procedure, when an RRC message and/or a PDCCH only explicitly provide(s) contention-free random access resources of 2-step random access within a selected random access resource group, set the random access type to be of 2-step random access.
6. The apparatus according to any one of supplements 1-5, wherein,
   the identifier is a C-RNTI.
7. A terminal equipment, including the apparatus as described in any one of supplements 1-6.
8. A communication system, including the terminal equipment as described in supplement 7 and a network device.

### Supplements (II)

1. A random access method, including:
   when a random access procedure on a candidate cell is initiated, setting a random access type by a terminal equipment to be of 4-step random access (4-stepRA); or
   when a random access procedure on a candidate cell is initiated, setting a random access type by the terminal equipment to be of 2-step random access (2-stepRA), an identifier of the terminal equipment in the candidate cell being included in a PUSCH of an MSGA.
2. The method according to supplement 1, wherein the when a random access procedure on a candidate cell is initiated, setting a random access type by a terminal equipment to be of 4-step random access, includes:
   when the random access procedure on the candidate cell is initiated by a PDCCH order and/or the random access procedure on the candidate cell is initiated to obtain timing advance (TA) of the candidate cell, setting the random access type by the terminal equipment to be of 4-step random access.
3. The method according to supplement 1, wherein,
   the identifier of the terminal equipment in the candidate cell is included in a candidate configuration.
4. The method according to supplement 1 or 3, wherein the setting a random access type by the terminal equipment to be of 2-step random access (2-stepRA) includes:
   for a BWP selected in the random access procedure, when an RRC message and/or a PDCCH explicitly provide(s) contention-free random access resources of 4-step random access and 2-step random access within a selected random access resource group and reference signal received power (RSRP) of a downlink path-loss reference is greater than a preset threshold, setting the random access type by the terminal equipment to be of 2-step random access.
5. The method according to supplement 1 or 3, wherein the setting a random access type by the terminal equipment to be of 2-step random access (2-stepRA) includes:
   for a BWP selected in the random access procedure, when an RRC message and/or a PDCCH only explicitly provide(s) contention-free random access resources of 2-step random access within a selected random access resource group, setting the random access type by the terminal equipment to be of 2-step random access.
6. The method according to any one of supplements 1-5, wherein,
   the identifier is a C-RNTI.

### Third group of supplements

### Supplements (I)

1. A random access apparatus, including:
   a first initiating unit configured to, when a terminal equipment evaluates a candidate cell and determines that the candidate cell satisfies a first condition and/or the terminal equipment evaluates a serving cell and determines that the serving cell satisfies a second condition or when the terminal equipment receives an MAC CE indicating a candidate cell, initiate a random access procedure on the candidate cell.
2. The apparatus according to supplement 1, wherein,
   the candidate cell is configured by RRC.
3. The apparatus according to supplement 2, wherein,
   the candidate cell is a target cell used for layer 1/layer 2 triggered mobility (LTM).
4. The apparatus according to any one of supplements 1-3, wherein the first condition includes at least one of the following conditions that:
   a layer 1 measurement result of a downlink reference signal (DL RS) of the candidate cell is better than a layer 1 measurement result of a downlink reference signal of the serving cell;
   the layer 1 measurement result of the downlink reference signal of the candidate cell is better than a configured first threshold;
   under a current serving cell, the terminal equipment has not initiated a random access procedure on the candidate cell;
   under the current serving cell, a preset time from initiating a random access procedure on the candidate cell by the terminal equipment for obtaining timing advance has passed; and
   a timer corresponding to a timing advance group to which the candidate cell belongs expires.
5. The apparatus according to supplement 4, wherein that the layer 1 measurement result of a downlink reference signal (DL RS) of the candidate cell is better than a layer 1 measurement result of a downlink reference signal of the serving cell includes that the layer 1 measurement result of the downlink reference signal (DL RS) of the candidate cell is better than the layer 1 measurement result of the downlink reference signal of the serving cell by a first offset and/or by lasting for a first time.
6. The apparatus according to supplement 4 or 5, wherein the downlink reference signal of the serving cell is a current downlink reference signal of the serving cell.
7. The apparatus according to supplement 4, wherein that the layer 1 measurement result of a downlink reference signal of the candidate cell is better than a configured first threshold includes that:
   the layer 1 measurement result of the downlink reference signal of the candidate cell is better than the configured first threshold by a second offset and/or by lasting for a second time.
8. The apparatus according to any one of supplements 1-7, wherein the second condition includes at least one of the following conditions that:
   the layer 1 measurement result of the downlink reference signal is worse than a configured second threshold; and
   a radio link failure is detected.
9. The apparatus according to supplement 8, wherein that the layer 1 measurement result of the downlink reference signal is worse than a configured second threshold includes that:
   the layer 1 measurement result of the downlink reference signal is worse than the configured second threshold by a third offset and/or by lasting for a third time.
10. The apparatus according to any one of supplements 4-9, wherein,
   the downlink reference signal is an SSB and/or a CSI-RS, and/or
   the downlink reference signal is configured with a corresponding random access resource, and/or
   the layer 1 measurement result is RSRP or an SINR.
11. The apparatus according to supplement 1, wherein,
   the MAC CE is a layer 1/layer 2-triggered mobility cell switch command.
12. The apparatus according to supplement 11, wherein,
   the MAC CE does not include timing advance of an indicated cell, and/or,
   the MAC CE includes information on a random access resource and/or a downlink reference signal of an indicated cell, and/or,
   the MAC CE includes information on a random access preamble (RA preamble) of an indicated cell.
13. A terminal equipment, including the apparatus as described in any one of supplements 1-12.
14. A communication system, including the terminal equipment as described in supplement 13 and a network device.

### Supplements (II)

1. A random access method, including:
   when a terminal equipment evaluates a candidate cell and determines that the candidate cell satisfies a first condition and/or the terminal equipment evaluates a serving cell and determines that the serving cell satisfies a second condition, or
   when the terminal equipment receives an MAC CE indicating a candidate cell,
   initiating a random access procedure on the candidate cell by the terminal equipment.
2. The method according to supplement 1, wherein,
   the candidate cell is configured by RRC.
3. The method according to supplement 2, wherein,
   the candidate cell is a target cell used for layer 1/layer 2 triggered mobility (LTM).
4. The method according to any one of supplements 1-3, wherein the first condition includes at least one of the following conditions that:
   a layer 1 measurement result of a downlink reference signal (DL RS) of the candidate cell is better than a layer 1 measurement result of a downlink reference signal of the serving cell;
   the layer 1 measurement result of the downlink reference signal of the candidate cell is better than a configured first threshold;
   under a current serving cell, the terminal equipment has not initiated a random access procedure on the candidate cell;
   under the current serving cell, a preset time from initiating a random access procedure on the candidate cell by the terminal equipment for obtaining timing advance has passed; and
   a timer corresponding to a timing advance group to which the candidate cell belongs expires.
5. The method according to supplement 4, wherein,
   that the layer 1 measurement result of a downlink reference signal (DL RS) of the candidate cell is better than a layer 1 measurement result of a downlink reference signal of the serving cell includes that the layer 1 measurement result of the downlink reference signal (DL RS) of the candidate cell is better than the layer 1 measurement result of the downlink reference signal of the serving cell by a first offset and/or by lasting for a first time.
6. The method according to supplement 4 or 5, wherein the downlink reference signal of the serving cell is a current downlink reference signal of the serving cell.
7. The method according to supplement 4, wherein,
   that the layer 1 measurement result of a downlink reference signal of the candidate cell is better than a configured first threshold includes that: the layer 1 measurement result of the downlink reference signal of the candidate cell is better than the configured first threshold by a second offset and/or by lasting for a second time.
8. The method according to any one of supplements 1-7, wherein the second condition includes at least one of the following conditions that:
   the layer 1 measurement result of the downlink reference signal is worse than a configured second threshold; and
   a radio link failure is detected.
9. The method according to supplement 8, wherein that the layer 1 measurement result of the downlink reference signal is worse than a configured second threshold includes that:
   the layer 1 measurement result of the downlink reference signal is worse than the configured second threshold by a third offset and/or by lasting for a third time.
10. The method according to any one of supplements 4-9, wherein,
   the downlink reference signal is an SSB and/or a CSI-RS, and/or
   the downlink reference signal is configured with a corresponding random access resource, and/or
   the layer 1 measurement result is RSRP or an SINR.
11. The method according to supplement 1, wherein,
   the MAC CE is a layer 1/layer 2-triggered mobility cell switch command.
12. The method according to supplement 11, wherein,
   the MAC CE does not include timing advance of an indicated cell, and/or,
   the MAC CE includes information on a random access resource and/or a downlink reference signal of an indicated cell, and/or,
   the MAC CE includes information on a random access preamble (RA preamble) of an indicated cell.

## Claims

1. A random access apparatus, comprising:
a first switch unit configured to, when a random access procedure on a candidate cell is initiated, for the candidate cell, switch an active uplink BWP from a first uplink BWP to a second uplink BWP or a third uplink BWP or a fourth uplink BWP by an MAC entity of a terminal equipment,
the second uplink BWP being an initial uplink BWP of the candidate cell or a serving cell associated with the candidate cell, the third uplink BWP being an uplink BWP of the candidate cell configured with PRACH occasions, and the fourth uplink BWP being an uplink BWP of the candidate cell indicated by a PDCCH.

2. The apparatus according to claim 1, wherein switching an active uplink BWP from a first uplink BWP to a second uplink BWP by an MAC entity of a terminal equipment comprises:
when the initial uplink BWP of the candidate cell is comprised in the initial uplink BWP of the serving cell associated with the candidate cell, switching the active uplink BWP from the first uplink BWP to the initial uplink BWP of the serving cell associated with the candidate cell by the MAC entity.

3. The apparatus according to claim 2, wherein,
the initial uplink BWP of the serving cell associated with the candidate cell is *initialUplinkBWP* or a BWP indicated by *initialUplinkBWP-RedCap.*

4. The apparatus according to claim 1, wherein switching an active uplink BWP from a first uplink BWP to a second uplink BWP by an MAC entity of a terminal equipment comprises:
when the initial uplink BWP of the candidate cell is not within the initial uplink BWP of the serving cell associated with the candidate cell, switching the active uplink BWP from the first uplink BWP to the initial uplink BWP of the candidate cell by the MAC entity.

5. The apparatus according to claim 4, wherein,
the initial uplink BWP of the candidate cell is *initialUplinkBWP* or a BWP indicated by *initialUplinkBWP-RedCap.*

6. The apparatus according to claim 1, wherein switching an active uplink BWP from a first uplink BWP to a second uplink BWP by an MAC entity of a terminal equipment comprises:
in a case where multiple uplink BWPs of the candidate cell are configured with PRACH occasions, selecting one of the multiple uplink BWPs and switching the active uplink BWP from the first uplink BWP to a selected uplink BWP by the terminal equipment.

7. The apparatus according to claim 2, wherein the apparatus further comprises:
a second switch unit configured to, when a serving cell to which the first uplink BWP belongs is a special cell, switch an active downlink BWP from a first downlink BWP to a second downlink BWP by the MAC entity.

8. The apparatus according to claim 1, wherein the apparatus further comprises:
a third switch unit configured to switch an active downlink BWP from a first downlink BWP to a third downlink BWP by the MAC entity,
the third downlink BWP being a downlink BWP of the candidate cell with the same BWP identifier (*bwp-id*) as the third uplink BWP or the fourth uplink BWP.

9. The apparatus according to claim 1, wherein the apparatus further comprises:
a fourth switch unit configured to switch the active uplink BWP from the second uplink BWP or the third uplink BWP or the fourth uplink BWP to the first uplink BWP.

10. The apparatus according to claim 1, wherein the apparatus further comprises:
a first setting unit configured to, when a random access procedure on a candidate cell is initiated, set a random access type to be of 4-step random access (4-stepRA); or
a second setting unit configured to, when a random access procedure on a candidate cell is initiated, set a random access type to be of 2-step random access (2-stepRA), and an identifier of the terminal equipment on the candidate cell being comprised in a PUSCH of an MSGA.

11. The apparatus according to claim 10, wherein,
the first setting unit is configured to, when the random access procedure on the candidate cell is initiated by a PDCCH order and/or the random access procedure on the candidate cell is initiated to obtain timing advance (TA) of the candidate cell, set the random access type to be of 4-step random access.

12. The apparatus according to claim 10, wherein,
the second setting unit is configured to, for the second uplink BWP or the third uplink BWP or the fourth uplink BWP, when an RRC message and/or a PDCCH explicitly provide(s) contention-free random access resources of 4-step random access and 2-step random access within a selected random access resource group and reference signal received power (RSRP) of a downlink path-loss reference is greater than a preset threshold, set the random access type to be of 2-step random access.

13. The apparatus according to claim 10, wherein,
the second setting unit is configured to, for the second uplink BWP or the third uplink BWP or the fourth uplink BWP, when the RRC message and/or the PDCCH only explicitly provide(s) contention-free random access resources of 2-step random access within the selected random access resource group, set the random access type to be of 2-step random access.

14. The apparatus according to claim 1, wherein the apparatus further comprises:
a first initiating unit configured to, when the terminal equipment evaluates the candidate cell and determines that the candidate cell satisfies a first condition and/or the terminal equipment evaluates the serving cell and determines that the serving cell satisfies a second condition or when the terminal equipment receives an MAC CE indicating a candidate cell, initiate a random access procedure on the candidate cell.

15. The apparatus according to claim 14, wherein the first condition comprises at least one of the following conditions that:
a layer L1 measurement result of a downlink reference signal (DL RS) of the candidate cell is better than a layer L 1 measurement result of a downlink reference signal of the serving cell;
a layer L1 measurement result of a downlink reference signal of the candidate cell is better than a configured first threshold;
in a current serving cell, the terminal equipment has not initiated a random access procedure on the candidate cell;
in a current serving cell, a preset period of time after the terminal equipment initiates a random access procedure to obtain timing advance on the candidate cell has passed; and
a timer corresponding to a timing advance group to which the candidate cell belongs expires.

16. The apparatus according to claim 14, wherein the second condition comprises at least one of the following conditions that:
a layer L1 measurement result of the downlink reference signal is worse than a configured second threshold; and
a radio link failure is detected.

17. The apparatus according to claim 14, wherein,
the MAC CE is a cell switch command of mobility triggered by layer L1/layer L2.

18. The apparatus according to claim 17, wherein,
the MAC CE does not comprise timing advance of an indicated cell, and/or,
the MAC CE comprises information on a random access resource and/or a downlink reference signal of an indicated cell, and/or,
the MAC CE comprises information on a random access preamble (RA preamble) of an indicated cell.

19. A random access apparatus, comprising:
a first transmitting unit configured to transmit a PDCCH or DCI triggering a random access procedure to a terminal equipment,
the PDCCH or the DCI indicating BWP information.

20. A communication system, comprising a terminal equipment and/or a network device,
the terminal equipment comprising the apparatus as claimed in claim 1,
and the network device comprising the apparatus as claimed in claim 19.
